# EUROPEAN PATENT APPLICATION

(11) **EP 4 478 729 A1**
(43) Date of publication of application: **18.12.2024**
(21) Application number: 23838510.8
(22) Date of filing: 28.04.2023
(51) Int. Cl.: H04N 23/60

(54) **VIDEO RECORDING METHOD AND ELECTRONIC DEVICE**

(30) Priority: 14.07.2022 CN 202210826232
(71) Applicant: Honor Device Co., Ltd., Shenzhen, Guangdong 518040 (CN)
(72) Inventor: GUO, Hailong, Shenzhen, Guangdong 518040 (CN)
(74) Representative: Gill Jennings & Every LLP
(86) International application number: PCT/CN2023/091458
(87) International publication number: WO 2024/012011

(57) **Abstract**

This application provides a video recording method and an electronic device, and relates to the field of photographing technologies. In a video recording process of the electronic device, if a user considers that a photographed picture involves privacy, a picture masking button on a photographing interface displayed on the electronic device may be triggered. In response to the triggering operation, the electronic device removes privacy content from a preview image collected by a camera. In this case, the electronic device still keeps a recording state. If the user considers that a sound collected by a microphone involves privacy, a sound masking button on the photographing interface may be triggered. In response to the triggering operation, the electronic device removes privacy content from the sound collected by the microphone. In this case, the electronic device still keeps the recording state. Therefore, in the video recording process, the electronic device can directly remove privacy information involved in recorded content, which does not affect the recording state, so that a finally obtained video is complete and does not include the privacy information.

## Description

This application claims priority to Chinese Patent Application No. 202210826232.7, filed with the China National Intellectual Property Administration on July 14, 2022, and entitled "VIDEO RECORDING METHOD AND ELECTRONIC DEVICE", which is incorporated herein by reference in its entirety.

### TECHNICAL FIELD

This application relates to the field of photographing technologies, and in particular, to a video recording method and an electronic device.

### BACKGROUND

With development of mobile phone technologies, photography functions of mobile phones have also undergone rapid development, and an increasing number of users prefer to use mobile phones to record videos.

Currently, a user records content that needs to be recorded when performing video recording with a mobile phone. After the video recording is completed, a corresponding video is obtained. When a picture or a sound in the video obtained through the video recording involves privacy, to protect privacy, the user edits the video by using related editing software, to remove the picture or the sound that involves privacy in the video.

However, the inventors have found that there are at least the following problems in the conventional technology: In a process of editing a video obtained through video recording, first, a frame-by-frame check needs to be performed on pictures and corresponding sounds in the video to determine whether privacy is involved. Then, when picture content or a sound involves privacy, a related editing operation needs to be performed on the picture content or the sound, to remove privacy information. The frame-by-frame check is performed on the pictures and the corresponding sounds in the video to determine whether privacy is involved, and then the related editing operation is performed, which leads to cumbersome privacy removal steps and a long time required for privacy removal, thereby causing low privacy removal efficiency.

### SUMMARY

In view of this, this application provides a video recording method and an electronic device, to improve efficiency of removing privacy information.

According to a first aspect, this application provides a video recording method, applied to an electronic device. The method includes:
The electronic device displays a first interface, where the first interface is an interface displayed when the electronic device performs video recording, and the first interface displays a preview image collected by a camera on the electronic device;
when receiving a first triggering operation performed by a user on the first interface, the electronic device performs masking processing on recorded content of the electronic device in response to the first triggering operation, where the recorded content may include the preview image collected by the camera on the electronic device and/or a sound collected by a microphone on the electronic device; and
when receiving a second triggering operation performed by the user, the electronic device stops video recording and generates a video file in response to the second triggering operation, where the video file includes recorded content obtained after the masking processing.

In this embodiment of this application, the electronic device displays the first interface in a video recording process. When the electronic device receives the first triggering operation that is entered by the user on the first interface, it indicates that the recorded content involves privacy. To avoid privacy disclosure, the electronic device performs the masking processing on the recorded content, to remove privacy information of the recorded content, so that the video file generated at the end of the recording does not involve privacy information. In addition, removal of the privacy is implemented in the recording process, and the user does not need to perform subsequent video editing to remove the privacy, but only needs to enter a simple triggering operation in the recording process, thereby reducing cumbersomeness of privacy removal, and effectively improving privacy removal efficiency. In addition, when the mobile phone removes the privacy information involved in the recorded content, a recording state is not affected. Therefore, integrity of the obtained video file can be ensured, to facilitate the user to perform other processing (such as duration statistics processing) by using the video file, and user experience is improved.

In a possible design, the recorded content may include the preview image collected by the camera and the sound collected by the microphone; and the first interface may include a first masking button, and the first masking button is used to trigger the electronic device to perform the masking processing on the preview image collected by the camera and the sound collected by the microphone.

The performing masking processing on recorded content of the electronic device in response to the first triggering operation includes:
The electronic device displays a second interface or a third interface and masks the sound collected by the microphone in response to a tap operation performed by the user on the first masking button, where the second interface and the third interface are interfaces displayed when the electronic device performs the video recording, a black screen image is displayed in the second interface, and an image in the third interface is partly or fully encrypted; and accordingly, at least some of images and sounds in the video file are masked.

In this embodiment of this application, the electronic device displays the first interface in the video recording process, and the first interface includes the first masking button. If both the preview image collected by the camera and the sound collected by the microphone on the electronic device involve privacy, the user may tap the first masking button. In response to the tap operation, the electronic device removes privacy information in the preview image and the sound, to implement concurrent masking processing on the preview image collected by the camera and the sound collected by the microphone, thereby avoiding privacy disclosure.

In a possible design, the second interface or the third interface may include a masking stop button corresponding to the first masking button. The method may further include:
in response to a tap operation performed by the user on the masking stop button, the electronic device stops performing the masking processing on the preview image collected by the camera and the sound collected by the microphone; and accordingly, at least some of the images and the sounds in the video file are not masked.

In this embodiment of this application, in a process in which the electronic device performs the masking processing on the preview image collected by the camera and the sound collected by the microphone, if the user considers that the recorded content no longer involves privacy information, the user may tap the masking top button on the second interface or the third interface. In response to the tap operation, the electronic device stops performing the masking processing on the recorded content, thereby implementing flexible start and end of the masking processing, and meeting a masking requirement of the user.

It should be noted that the masking stop button and the first masking button may be a same button. Specifically, when the electronic device performs the masking processing on the recorded content of the electronic device, the button is in a masked state, and the button may be used as the masking stop button. After receiving a tap operation performed by the user on the masking stop button, the electronic device may stop masking the recorded content of the electronic device. When the electronic device does not perform the masking processing on the recorded content, the button is in an unmasked state, and the button may be used as the first masking button. After receiving a tap operation performed by the user on the first masking button, the electronic device may start masking the recorded content of the electronic device.

In a possible design, the recorded content may include the preview image collected by the camera, the first interface may include a second masking button, and the second masking button is used to trigger the electronic device to perform masking processing on the preview image collected by the camera.

The performing masking processing on recorded content of the electronic device in response to the first triggering operation includes:
The electronic device displays a second interface or a third interface in response to a tap operation performed by the user on the second masking button, where a black screen image is displayed in the second interface, and an image in the third interface is partly or fully encrypted.

Accordingly, the video file includes a preview image obtained after masking processing.

In this embodiment of this application, the electronic device displays the first interface in the video recording process, and the first interface includes a second masking button. If the preview image collected by the camera on the electronic device involves privacy, the user may tap the second masking button. In response to the tap operation, the electronic device removes privacy information in the preview image through picture closing processing or picture encryption processing, to implement masking processing on the preview image collected by the camera, thereby avoiding privacy disclosure, and also ensuring integrity of the sound collected by the microphone.

In a possible design, the second interface or the third interface may include a masking stop button corresponding to the second masking button.

In a possible design, the first interface may further include a third masking button, and the third masking button is used to trigger the electronic device to perform masking processing on the sound collected by the microphone.

The method further includes:
In a video recording process of the electronic device, the electronic device receives a tap operation performed by the user on the third masking button; and
in response to the tap operation on the third masking button, the electronic device masks the sound collected by the microphone.

Accordingly, at least some of sounds in the video file are masked.

In this embodiment of this application, in a process in which the electronic device masks the preview image collected by the camera, if the sound collected by the microphone on the electronic device involves privacy, the user may tap the third masking button. In response to the tap operation, the electronic device masks the sound collected by the microphone, and removes privacy information in the sound, to implement masking processing on the sound collected by the microphone, thereby avoiding privacy disclosure. In addition, flexible masking of the image and the sound is implemented, to meet a requirement of the user for masking the image and the sound.

In a possible design, the first interface may include a masking stop button corresponding to the third masking button.

In a possible design, the recorded content may include the sound collected by the microphone, the first interface may include a third masking button, and the third masking button is used to trigger the electronic device to perform masking processing on the sound collected by the microphone.

The performing masking processing on recorded content of the electronic device in response to the first triggering operation includes:
In response to a tap operation performed by the user on the third masking button, the electronic device masks the sound collected by the microphone; and accordingly, at least some of sounds in the video file are masked.

In this embodiment of this application, the electronic device displays the first interface in the video recording process, and the first interface includes the third masking button. If the sound collected by the microphone on the electronic device involves privacy, the user may tap the third masking button. In response to the tap operation, the electronic device masks the sound collected by the microphone, and removes privacy information in the sound, thereby avoiding privacy disclosure, and also ensuring integrity of the preview image collected by the camera.

In a possible design, the performing masking processing on the sound collected by the microphone includes:
The electronic device controls the microphone to stop recording sound, or the electronic device encrypts the sound collected by the microphone.

In a possible design, the first interface may include a fourth masking button and a fifth masking button. The fourth masking button is used to trigger the electronic device to stop displaying the preview image collected by the camera, that is, trigger the electronic device to disable the camera and display a black screen image. The fifth masking button is used to trigger the electronic device to encrypt the preview image collected by the camera and display an encrypted preview image.

The performing masking processing on recorded content of the electronic device in response to the first triggering operation includes:
The electronic device displays a second interface in response to a tap operation performed by the user on the fourth masking button, where a black screen image is displayed in the second interface, and the first triggering operation is a tap operation herein performed by the user on the fourth masking button; and accordingly, at least some of images in the video files are black screen images;
   or
the electronic device displays a third interface in response to a tap operation performed by the user on the fifth masking button, where an image in the third interface is partly or fully encrypted, and the first triggering operation is a tap operation performed by the user on the fifth masking button; and accordingly, at least some of images in the video file are encrypted.

In this embodiment of this application, the electronic device displays the first interface in the video recording process, and the first interface may include two types of picture masking buttons: the fourth masking button and the fifth masking button, respectively. A picture masking processing manner corresponding to the fourth masking button is picture closing processing, and a picture masking processing manner corresponding to the fifth masking button is picture encryption processing. When the user considers that the preview image collected by the camera involves privacy, the user may tap the fifth masking button or the fourth masking button according to a requirement, to flexibly select a picture masking processing manner (for example, if the user wants to close a privacy picture, the user may tap the fourth masking button; and if the user does not want to expose privacy content, does not want inconsecutive content photographed previously and later, and prevents people who watch the finally recorded video from being confused about a possible occurrence of a black screen in the video, the user may tap the fifth masking button). In response to the tap operation, the electronic device performs picture closing processing on the preview image collected by the camera, and displays the second interface, or the electronic device performs picture encryption processing on the preview image collected by the camera, and displays the third interface, to implement flexible masking processing on the preview image collected by the camera, thereby meeting a masking requirement of the user while removing privacy information in the preview image.

In a possible design, the second interface may include a masking stop button corresponding to the fourth masking button, or the third interface may include a masking stop button corresponding to the fifth masking button.

In a possible design, that the image in the third interface is partly or fully encrypted is specifically as follows: An occlusion box is displayed on a preview image displayed in the third interface, where the occlusion box is used to occlude a part or a whole of a picture of the preview image.

The method further includes:
in response to an adjustment operation performed by the user on the occlusion box, adjusting a picture occluded by the occlusion box.

Accordingly, that at least some of the images in the video file are masked is specifically as follows: At least some of the images in the video file are images occluded by the occlusion box.

In a possible design, that the image in the third interface is partly or fully encrypted is specifically as follows: An occlusion box is displayed on a preview image displayed in the third interface, where the occlusion box is used to determine a partial picture or a whole picture to be masked in the preview image.

The method further includes:
in response to an adjustment operation performed by the user on the occlusion box, adjusting a picture occluded by the occlusion box, determining a to-be-occluded area in the preview image, and performing encryption processing on the to-be-occluded area. Accordingly, an image in the to-be-occluded area in the third interface is encrypted.

The adjusting a picture occluded by the occlusion box is specifically as follows: adjusting the picture occluded by the occlusion box by adjusting a position and/or a size of the occlusion box.

In this embodiment of this application, the user may adjust the position, the size, and the like of the occlusion box according to an occlusion requirement, so that the mobile phone can occlude, based on the adjusted occlusion box, a picture portion that involves privacy in the preview image, which does not affect another portion that does not involve privacy in the preview image.

In a possible design, the method further includes:
The electronic device determines an image of a to-be-encrypted object in the preview image collected by the camera, and performs encryption processing on the image of the to-be-encrypted object; and accordingly, an image of a to-be-encrypted object in the third interface is encrypted.

In this embodiment of this application, when encrypting the preview image collected by the camera, the electronic device automatically performs semantic analysis on the preview image collected by the camera, to determine the image of the to-be-encrypted object in the preview image, where the to-be-encrypted object indicates an object involving privacy content (such as an identity card or a license plate number); and then, the electronic device automatically encrypts the image of the to-be-encrypted object, to automatically encrypt a picture of the preview image.

In a possible design, the method further includes:
The electronic device may further display a fourth interface, where the fourth interface is an interface displayed when the electronic device performs video recording, the fourth interface includes the preview image collected by the camera on the electronic device, and the fourth interface may include a first button; and
in response to a tap operation performed by the user on the first button, the electronic device displays the first interface that includes the fourth masking button and the fifth masking button.

In this embodiment of this application, to make the first interface simpler, and avoid a problem that user misoperation may easily occur due to too many controls on the first interface, the fourth masking button and the fifth masking button may be level-2 menu controls, that is, only after the user triggers a level-1 menu control (that is, the first button) corresponding to the fourth masking button and the fifth masking button in the fourth interface, the electronic device displays the fourth masking button and the fifth masking button.

In a possible design, the first interface may include a sixth masking button and a seventh masking button, where the sixth masking button is used to trigger the electronic device to control the microphone to stop sound collection, that is, disable the microphone, and the seventh masking button is configured to trigger the electronic device to encrypt the sound collected by the microphone.

The performing masking processing on recorded content of the electronic device in response to the first triggering operation includes:
In response to a tap operation performed by the user on the sixth masking button, the electronic device controls the microphone to stop sound collection, where the first triggering operation is a tap operation herein performed by the user on a sound off button, and accordingly, at least some of sounds in the video file are muted;
   or
in response to a tap operation performed by the user on the seventh masking button, the electronic device encrypts the sound collected by the microphone, where the first triggering operation is a tap operation herein performed by the user on the seventh masking button, and accordingly, at least some of sounds in the video file are encrypted.

In this embodiment of this application, the electronic device displays the first interface in the video recording process, and the first interface may include two types of sound masking buttons: the sixth masking button and the sixth masking button, respectively. A sound masking processing manner corresponding to the sixth masking button is sound off processing, and a sound masking processing manner corresponding to the seventh masking button is sound encryption processing. When the user considers that the sound collected by the microphone involves privacy, the user may tap the sixth masking button or the seventh masking button to flexibly select a sound masking processing manner (for example, if the user wants the electronic device to stop performing sound off processing on the sound collected by the microphone, the user may tap the sound off button; and if the user does not want to expose chat content, but wants to keep sounds of a video to avoid a sound interruption caused by muting, prevent a disconnection between previous and later sounds, and prevent people who watch the recorded video from being confused about a possible occurrence of muting in the video, the user may tap the sound encryption button). In response to the tap operation, the electronic device disables the microphone, or the electronic device encrypts the sound collected by the microphone, to implement flexible masking processing on the sound collected by the microphone, thereby meeting a masking requirement of the user while removing privacy information in the sound collected by the microphone.

In a possible design, the first interface may include a masking stop button corresponding to the sixth masking button or a masking stop button corresponding to the seventh masking button.

In a possible design, the method further includes:
The electronic device may further display a fifth interface, where the fifth interface is also an interface displayed when the electronic device performs video recording, and the fifth interface includes a second button; and
in response to a tap operation performed by the user on the second button, the electronic device displays the first interface that includes the sixth masking button and the seventh masking button.

In this embodiment of this application, to make the first interface simpler, and avoid a problem that user misoperation may easily occur due to too many controls on the first interface, the sixth masking button and the seventh masking button may be level-2 menu controls, that is, only after the user triggers a level-1 menu control (that is, the second button) corresponding to the sixth masking button and the seventh masking button in the fifth interface, the electronic device displays the sixth masking button and the seventh masking button.

In a possible design, the method further includes:
The electronic device receives a third triggering operation performed by the user, and displays a setting interface in response to the third triggering operation performed by the user, where the setting interface includes an operation delay control, and the operation delay control is used to set an operation delay; and
determines an operation delay in response to a fourth triggering operation performed by the user on the operation delay control, where the operation delay indicates duration of performing masking processing in advance.

Correspondingly, when performing masking processing on the recorded content, the electronic device performs masking processing on current recorded content and content recorded in a first time period, where the first time period indicates a time period of an operation delay before the electronic device receives the first triggering operation.

The operation delay includes a picture operation delay and/or a sound operation delay.

In this embodiment of this application, if the user sets a picture operation delay, when the electronic device receives the first triggering operation that indicates to perform masking processing on the preview image collected by the camera, the electronic device not only starts to perform masking processing on a current preview image collected by the camera, but also performs masking processing on a preview image collected by the camera within a time period (that is, the picture operation delay) before the first triggering operation is received by the electronic device, to resolve a picture masking delay problem. Similarly, if the user sets a sound operation delay, when the electronic device receives the first triggering operation that indicates to perform masking processing on the sound collected by the microphone, the electronic device not only starts to perform masking processing on a current sound collected by the microphone, but also performs masking processing on a sound collected by the microphone within a time period (that is, the sound operation delay) before the first triggering operation is received by the electronic device, to resolve a sound masking delay problem, and avoid a case in which content recorded before the electronic device performs masking processing may still involve privacy due to an operation delay, thereby effectively reducing a risk of privacy disclosure.

According to a second aspect, this application provides an electronic device. The electronic device includes a display, a camera, a memory, a microphone, and one or more processors. The display, the camera, the microphone, and the memory are coupled to the processor; the microphone is configured to collect a sound, the camera is configured to collect an image, the display is configured to display an image generated by the processor and the image collected by the camera, the memory is configured to store computer program code, and the computer program code includes computer instructions; and when the processor executes the computer instructions, the electronic device is enabled to perform the video recording method described above.

According to a third aspect, this application provides a computer-readable storage medium, including computer instructions. When the computer instructions are run on an electronic device, the electronic device is enabled to perform the video recording method described above.

According to a fourth aspect, this application provides a computer program product. When the computer program product runs on an electronic device, the electronic device is enabled to perform the video recording method described above.

It can be understood that, for beneficial effects that can be achieved by the electronic device described in the second aspect, the computer-readable storage medium described in the third aspect, and the computer program product described in the fourth aspect, reference may be made to the beneficial effects in the first aspect and any possible design manner of the first aspect. Details are not described herein.

### BRIEF DESCRIPTION OF DRAWINGS

FIG. 1 is a schematic diagram 1 of a display interface of video recording according to an embodiment of this application;
FIG. 2 is a schematic diagram of a hardware structure of an electronic device according to an embodiment of this application;
FIG. 3 is a schematic flowchart of a video recording method according to an embodiment of this application;
FIG. 4 is a schematic diagram 2 of a display interface of video recording according to an embodiment of this application;
FIG. 5 is a schematic diagram 3 of a display interface of video recording according to an embodiment of this application;
FIG. 6 is a schematic diagram 4 of a display interface of video recording according to an embodiment of this application;
FIG. 7 is a schematic diagram 5 of a display interface of video recording according to an embodiment of this application;
FIG. 8 is a schematic diagram 1 of an interface of occlusion box encryption according to an embodiment of this application;
FIG. 9 is a schematic diagram 2 of an interface of occlusion box encryption according to an embodiment of this application;
FIG. 10 is a schematic diagram 3 of an interface of occlusion box encryption according to an embodiment of this application;
FIG. 11 is a schematic diagram 4 of an interface of occlusion box encryption according to an embodiment of this application;
FIG. 12 is a schematic diagram 5 of an interface of occlusion box encryption according to an embodiment of this application;
FIG. 13 is a schematic diagram 6 of a display interface of video recording according to an embodiment of this application;
FIG. 14 is a schematic diagram 1 of an interface of picture closing processing according to an embodiment of this application;
FIG. 15 is a schematic diagram 2 of an interface of picture closing processing according to an embodiment of this application;
FIG. 16 is a schematic diagram 3 of an interface of picture closing processing according to an embodiment of this application;
FIG. 17 is a schematic diagram 1 of an interface of picture encryption processing according to an embodiment of this application;
FIG. 18 is a schematic diagram 2 of an interface of picture encryption processing according to an embodiment of this application;
FIG. 19 is a schematic diagram 3 of an interface of picture encryption processing according to an embodiment of this application;
FIG. 20 is a schematic diagram 7 of a display interface of video recording according to an embodiment of this application;
FIG. 21 is a schematic diagram 1 of an interface of sound off processing according to an embodiment of this application;
FIG. 22 is a schematic diagram 2 of an interface of sound off processing according to an embodiment of this application;
FIG. 23 is a schematic diagram 3 of an interface of sound off processing according to an embodiment of this application;
FIG. 24 is a schematic diagram 1 of an interface of sound encryption processing according to an embodiment of this application;
FIG. 25 is a schematic diagram 2 of an interface of sound encryption processing according to an embodiment of this application;
FIG. 26 is a schematic diagram 3 of an interface of sound encryption processing according to an embodiment of this application;
FIG. 27 is a schematic diagram 1 of a setting interface according to an embodiment of this application;
FIG. 28 is a schematic diagram 2 of a setting interface according to an embodiment of this application;
FIG. 29 is a schematic diagram 3 of a setting interface according to an embodiment of this application;
FIG. 30 is a schematic diagram 4 of a setting interface according to an embodiment of this application;
FIG. 31 is a schematic diagram 1 of an interface of delay setting according to an embodiment of this application;
FIG. 32 is a schematic diagram 2 of an interface of delay setting according to an embodiment of this application; and
FIG. 33 is a schematic diagram 3 of an interface of delay setting according to an embodiment of this application.

### DESCRIPTION OF EMBODIMENTS

In the following descriptions, the terms "first" and "second" are used only for the purpose of description, and shall not be construed as indicating or implying relative importance or implicitly indicating a quantity of indicated technical features. Therefore, a feature defined as "first" or "second" may explicitly or implicitly include one or more of the features. In descriptions of the embodiments, unless otherwise stated, "a plurality of" means two or more.

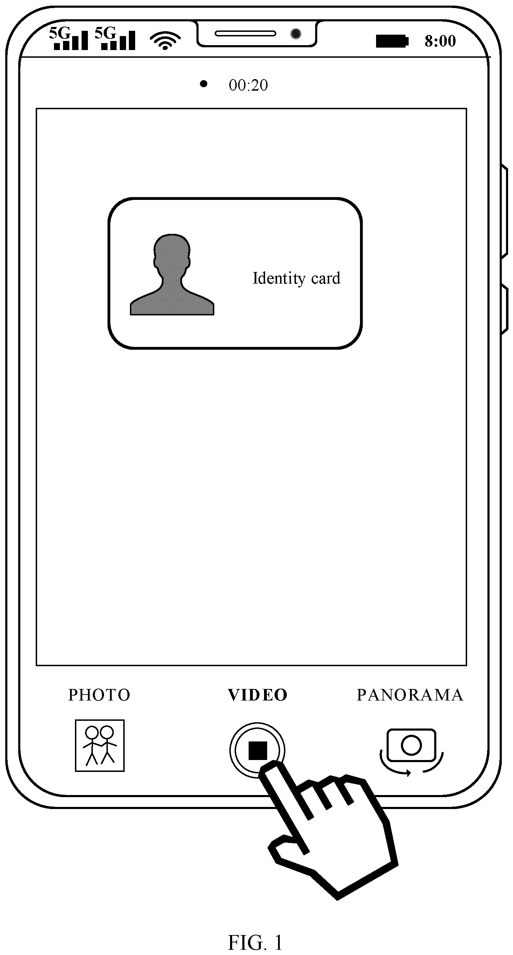

In some implementations, in a video recording (that is, producing a video by recording) process, a user may use a segment-based recording manner to protect privacy, that is, when the user determines that recorded content (for example, a preview image collected by a camera or a sound collected by a microphone) involves privacy, the user performs a tap operation on a stop button on a photographing interface displayed on a mobile phone (as shown in FIG. 1). The mobile phone stops the video recording and generates a video file in response to the tap operation. Then, if the user considers that the recorded content no longer involves privacy, the user may perform video recording again by using the mobile phone. Then, after the video recording ends, the mobile phone generates a new video. However, in some cases, even if the recorded content involves privacy, the recording cannot be paused and needs to proceed until completion. For example, because a video obtained through video recording needs to be used to count entire conference duration or defense duration, the mobile phone needs to record a complete conference process. In this case, to protect privacy, the user can only post-edit the video to remove privacy information in the video obtained through the video recording. On one hand, efficiency of removing the privacy information by post-editing the video is low. On the other hand, when the user is unable to use editing software to edit the video, another person needs to help edit the video. In this case, the privacy information in the video is at risk of disclosure.

Therefore, to resolve the foregoing problem, this application proposes a solution for performing video recording by using an electronic device, where an application capable of performing video recording is installed on the electronic device. A photographing interface provided by the application includes a preset button, and the preset button may include a picture masking button and/or a sound masking button. The picture masking button is used to remove privacy content in a preview image collected by a camera, and the sound masking button is used to remove privacy content in a sound collected by a microphone (that is, a sound collected by a microphone).

In a process in which the user uses the electronic device to perform video recording, if the user considers that a photographed picture involves privacy, the user may trigger the picture masking button on the photographing interface displayed on the electronic device. In response to the triggering operation performed by the user on the picture masking button, the electronic device may remove the privacy content (for example, close or encrypt a current picture) in the preview image collected by the camera. In this case, the electronic device still keeps a recording state.

If the user considers that the sound collected by the microphone involves privacy, the user may trigger the sound masking button on the photographing interface displayed on the electronic device. In response to the triggering operation performed by the user on the sound masking button, the electronic device removes the privacy content (for example, turns off or encrypts the sound) in the sound collected by the microphone. In this case, the electronic device still keeps the recording state.

According to the method provided in this application, in the video recording process, the electronic device may directly perform an operation on the preview image collected by the camera or the sound collected by the microphone, to remove privacy information involved in recorded content, without affecting the recording state. Therefore, after the video recording ends, an obtained video is complete without privacy information, thereby effectively reducing a risk of privacy disclosure. In addition, the user does not need to post-edit the video, but only needs to perform simple triggering operations in the video recording process, so that the electronic device can remove the privacy information involved in the recorded content, thereby implementing rapid privacy removal, improving privacy removal efficiency, and meeting a use requirement of the user.

For example, the electronic device in this embodiment of this application may be a device capable of performing video recording, such as a mobile phone, a tablet computer, a wearable device, or a personal digital assistant (personal digital assistant, PDA). A specific form of the electronic device is not specifically limited in this embodiment of this application.

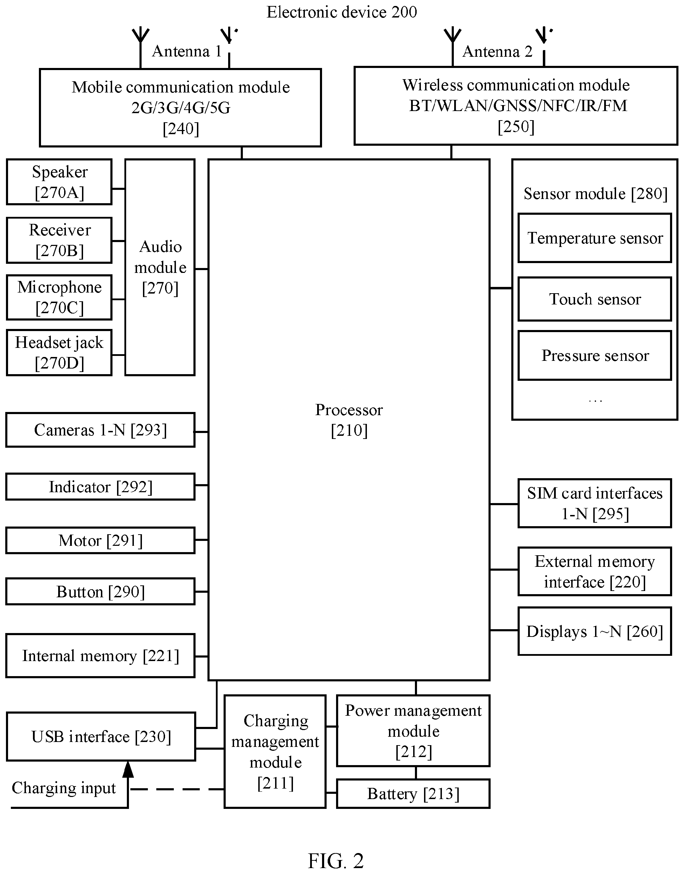

For example, FIG. 2 is a schematic diagram of a structure of an electronic device 200. As shown in FIG. 2, the electronic device 200 may include a processor 210, an external memory interface 220, an internal memory 221, a universal serial bus (universal serial bus, USB) interface 230, a charging management module 211, a power management module 212, a battery 213, an antenna 1, an antenna 2, a mobile communication module 240, a wireless communication module 250, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identification module, SIM) card interface 295, and the like.

It can be understood that the structure shown in this embodiment of the present invention does not constitute a specific limitation on the electronic device 200. In some other embodiments of this application, the electronic device 200 may include more or fewer components than those shown in the figure, some components may be combined, some components may be split, or there may be different component arrangements. The components shown in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 200. The controller may generate an operation control signal based on instruction operation code and a timing signal, to complete control of instruction fetching and instruction execution.

A memory may be further disposed in the processor 210 to store instructions and data. In some embodiments, the memory in the processor 210 is a cache memory. The memory may store instructions or data recently used or cyclically used by the processor 210. If the processor 210 needs to use the instructions or the data again, the processor may directly invoke the instructions or the data from the memory. This avoids repeated access and reduces waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules in this embodiment of the present invention is only an example for description, and does not constitute a limitation on the structure of the electronic device 200. In some other embodiments of this application, the electronic device 200 may alternatively use an interface connection manner different from that in the foregoing embodiment, or a combination of a plurality of interface connection manners.

The charging management module 211 is configured to receive a charging input from a charger. The charger may be a wireless charger or a wired charger. In some embodiments of wired charging, the charging management module 211 may receive a charging input of a wired charger through the USB interface 230. In some embodiments of wireless charging, the charging management module 211 may receive a wireless charging input by using a wireless charging coil of the electronic device 200. The charging management module 211 may further supply power to the electronic device by using the power management module 212 while charging the battery 213.

A wireless communication function of the electronic device 200 may be implemented by using the antenna 1, the antenna 2, the mobile communication module 240, the wireless communication module 250, the modem processor, the baseband processor, and the like.

The antenna 1 and the antenna 2 are configured to transmit and receive electromagnetic wave signals. Each antenna of the electronic device 200 may be configured to cover one or more communication bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 240 may provide a solution applied to the electronic device 200 for wireless communication including 2G/3G/4G/5G and the like. The mobile communication module 240 may include at least one filter, switch, power amplifier, low noise amplifier (low noise amplifier, LNA), and the like. The mobile communication module 240 may receive an electromagnetic wave through the antenna 1, perform processing such as filtering or amplification on the received electromagnetic wave, and transmit the electromagnetic wave to the modem processor for demodulation. The mobile communication module 240 may further amplify a signal modulated by the modem processor, and convert the signal into an electromagnetic wave through the antenna 1 for radiation. In some embodiments, at least some functional modules in the mobile communication module 240 may be disposed in the processor 210. In some embodiments, at least some functional modules in the mobile communication module 240 may be disposed in a same device as at least some modules in the processor 210.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low-frequency baseband signal obtained through demodulation. The low-frequency baseband signal is processed by the baseband processor and then transferred to the application processor. The application processor outputs a sound signal by using an audio device (not limited to the loudspeaker 270A or the receiver 270B), or displays an image or a video by using the display 294. In some embodiments, the modem processor may be an independent device. In some other embodiments, the modem processor may be independent of the processor 210, and the modem processor and the mobile communication module 240 or another functional module may be disposed in a same component.

The wireless communication module 250 may provide a solution for wireless communication that is applied to the electronic device 200 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 250 may be one or more components integrating at least one communication processing module. The wireless communication module 250 receives an electromagnetic wave by using the antenna 2, performs frequency modulation and filtering processing on an electromagnetic wave signal, and sends a processed signal to the processor 210. The wireless communication module 250 may further receive a to-be-sent signal from the processor 210, perform frequency modulation and amplification on the to-be-sent signal, and convert the to-be-sent signal into an electromagnetic wave for radiation through the antenna 2.

The electronic device 200 implements a display function by using the GPU, the display 294, the application processor, and the like. The GPU is a microprocessor for image processing, and is connected to the display 294 and the application processor. The GPU is configured to perform mathematical and geometric calculation for graphics rendering. The processor 210 may include one or more GPUs that execute program instructions to generate or change display information.

The display 294 is configured to display an image, a video, or the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, a quantum dot light-emitting diode (quantum dot light emitting diode, QLED), and the like. In some embodiments, the electronic device 200 may include one or N displays 294, where N is a positive integer greater than 1.

The electronic device 200 can implement a photographing function by using the ISP, the camera 293, the video codec, the GPU, the display 294, the application processor, and the like.

The ISP is configured to process data fed back by the camera 293. For example, during photographing, a shutter is opened, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 293.

The camera 293 is configured to capture a static image or a video. An optical image is generated for an object through a lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 200 may include one or N cameras 293, where N is a positive integer greater than 1.

The digital signal processor is configured to process a digital signal, and may process another digital signal in addition to the digital image signal. For example, when the electronic device 200 selects a frequency, the digital signal processor is configured to perform Fourier transform or the like on frequency energy.

The video codec is configured to compress or decompress a digital video. The electronic device 200 can support one or more types of video codecs. Therefore, the electronic device 200 may play or record videos in a plurality of encoding formats such as moving picture experts group (moving picture experts group, MPEG)1, MPEG2, MPEG3, and MPEG4.

The NPU is a neural-network (neural-network, NN) computing processor, which quickly processes input information by referring to a biological neural network structure, for example, by referring to a transmission mode between human brain neurons, and may further perform self-learning continuously. Application such as intelligent recognition of the electronic device 200, for example, image recognition, face recognition, speech recognition, and text understanding, can be implemented by using the NPU.

In some embodiments, in a video recording process of the electronic device 200, the camera 293 transmits an image photographed by the camera 293 to the processor 210, and the processor 210 displays the image as a preview image on the display 294.

The external memory interface 220 may be configured to connect to an external storage card, for example, a Micro SD card, to extend a storage capability of the electronic device 200.

The internal memory 221 may be configured to store computer-executable program code. The executable program code includes instructions. The processor 210 implements various function applications and data processing of the electronic device 200 by running the instructions stored in the internal memory 221. The internal memory 221 may include a program storage area and a data storage area. The program storage area may store an operating system, an application required by at least one function (for example, a sound playback function or an image playback function), and the like. The data storage area may store data (for example, a sound and an address book) and the like created during use of the electronic device 200. In addition, the internal memory 221 may include a high-speed random access memory, and may further include a non-volatile memory, for example, at least one magnetic disk storage device, a flash memory device, or a universal flash storage (universal flash storage, UFS).

The electronic device 200 may implement an audio function by using the audio module 270, the speaker 270A, the receiver 270B, the microphone 270C, the headset jack 270D, the application processor, and the like. For example, music playback or audio recording is implemented.

The audio module 270 is configured to convert digital audio information into an analog audio signal for output, and is also configured to convert an analog audio input into a digital audio signal. The audio module 270 may be further configured to encode and decode an audio signal. In some embodiments, the audio module 270 may be disposed in the processor 210, or some functional modules of the audio module 270 may be disposed in the processor 210.

The speaker 270A, also referred to as a "loudspeaker", is configured to convert an audio electrical signal into a sound signal. The electronic device 200 may be used to listen to music or answer a hands-free call by using the speaker 270A.

The receiver 270B, also referred to as an "earpiece", is configured to convert an audio electrical signal into a sound signal. When the electronic device 200 is used to answer a call or listen to a voice message, the receiver 270B may be placed near a human ear to listen to a voice.

The microphone 270C, also referred to as a "mic" or "mike", is configured to convert a sound signal into an electrical signal. When making a call or sending a voice message, a user may make a sound by approaching the mouth to the microphone 270C, to input a sound signal to the microphone 270C. At least one microphone 270C may be disposed in the electronic device 200. In some other embodiments, two microphones 270C may be disposed in the electronic device 200, to implement a noise reduction function in addition to sound signal collection. In some other embodiments, three, four, or more microphones 270C may alternatively be disposed in the electronic device 200, to collect a sound signal, reduce noise, and identify a sound source to implement a directional sound recording function, and the like.

In some embodiments, in a video recording process, the microphone 270 may further collect a sound signal of an environment in which the electronic device is located.

The headset jack 270D is configured to connect to a wired headset.

The button 290 includes a power button, a volume button, and the like. The button 290 may be a mechanical key, or may be a touch key.

The indicator 292 may be an indicator light, and may be configured to indicate a charging state, a power change, a message, a missed call, a notification, and the like.

The sensor module 280 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

In a process in which the user uses the electronic device to perform video recording, when the user considers that a preview image collected by the camera involves privacy, the user may enter a corresponding triggering operation on a photographing interface displayed on the electronic device. In response to the triggering operation, the electronic device performs masking processing on the preview image collected by the camera, so that in a finally obtained video file, the image is a processed image, and privacy is prevented from being involved in a picture in the video. In addition, when the user considers that a sound collected by the microphone involves privacy, the user may enter a corresponding triggering operation on the photographing interface displayed on the electronic device. In response to the triggering operation, the electronic device performs masking processing on the sound collected by the microphone, so that in the finally obtained video file, the sound is a processed sound, and privacy is prevented from being involved in a sound in the video.

The method in embodiment of this application may be applied to any scenario in which video recording needs to be performed by using an electronic device, for example, video recording is performed on a conference process, a defense process, and a landscape by using the electronic device. The following describes the method in embodiments of this application by using an example in which the electronic device is a mobile phone.

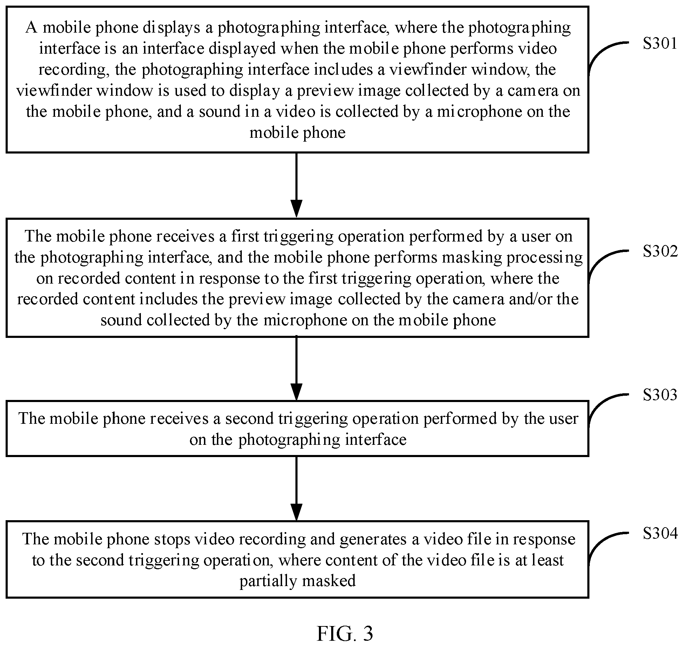

The video recording method provided in embodiments of this application is described in detail below with reference to the accompanying drawings. As shown in FIG. 3, the method includes the following steps:
S301: A mobile phone displays a photographing interface. The photographing interface is an interface displayed when the mobile phone performs video recording. The photographing interface includes a viewfinder window, and the viewfinder window is used to display a preview image collected by a camera on the mobile phone.

The photographing interface is an interface displayed in a video recording process of the mobile phone. The photographing interface may further include a preset button, and the preset button is used to trigger the mobile phone to perform masking processing on recorded content. The recorded content may include the preview image collected by the camera and/or a sound in a video. The sound in the video is collected by a microphone on the mobile phone.

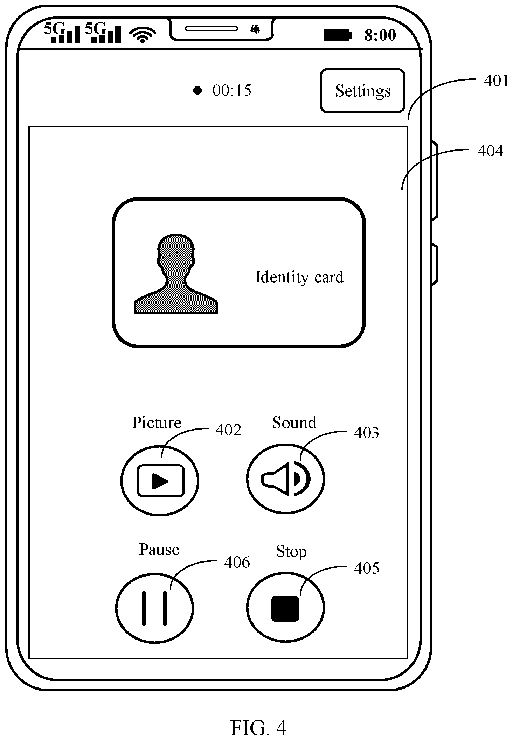

In some embodiments, the photographing interface may include a plurality of preset buttons. For example, the mobile phone may display a photographing interface 401 shown in FIG. 4. The plurality of preset buttons may include a picture masking button (that is, a second masking button) 402 and a sound masking button (that is, a third masking button) 403 that are in the photographing interface 401 shown in FIG. 4. The picture masking button 402 is used to trigger the mobile phone to perform masking processing on the preview image collected by the camera, and the sound masking button 403 is used to trigger the mobile phone to perform masking processing on the sound collected by the microphone.

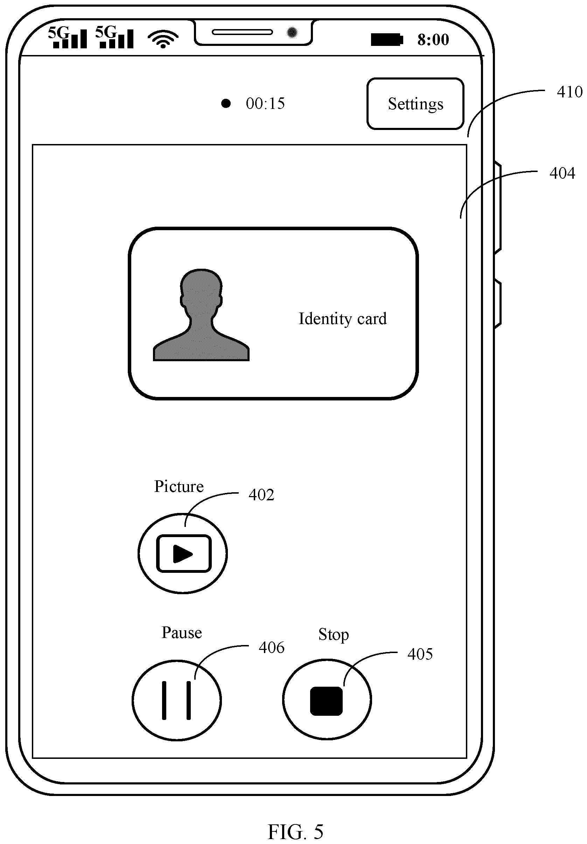

In some other embodiments, the photographing interface may include one preset button. The preset button is used to trigger the mobile phone to perform masking processing on the preview image collected by the camera. For example, the mobile phone may display a photographing interface 410 shown in FIG. 5. The photographing interface 410 may include a preset button. The preset button may be a picture masking button 402 shown in FIG. 5.

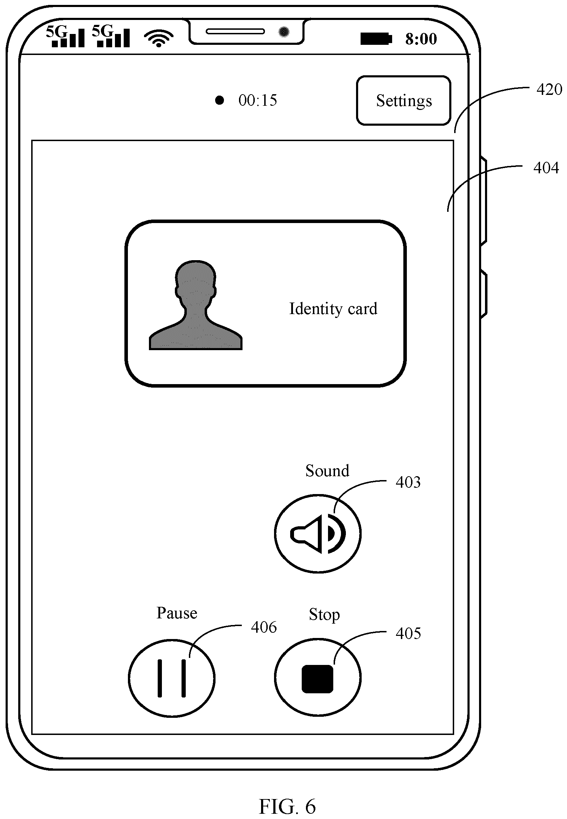

In some other embodiments, the photographing interface may include one preset button. The preset button is used to trigger the mobile phone to perform masking processing on the sound collected by the microphone. For example, the mobile phone may display a photographing interface 420 shown in FIG. 6. The photographing interface 420 may include a preset button. The preset button may be a sound masking button 403 shown in FIG. 6.

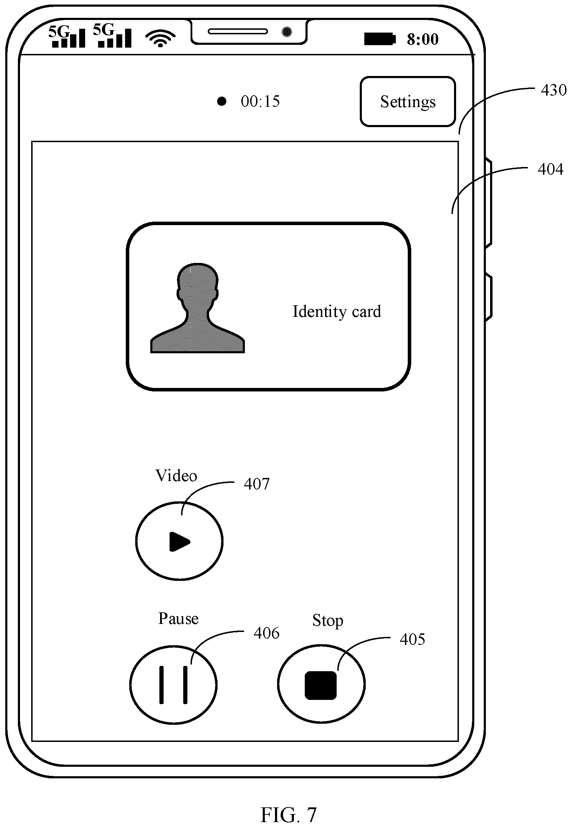

In some other embodiments, the photographing interface may include one preset button. The preset button may be used to trigger the mobile phone to simultaneously perform masking processing on the preview image collected by the camera and the sound collected by the microphone. For example, the mobile phone may display a photographing interface 430 shown in FIG. 7. The photographing interface 430 may include a preset button. The preset button may be a video masking button (that is, a first masking button) 407 shown in FIG. 7.

As shown in FIG. 4 to FIG. 7, the photographing interface 401 may further include a viewfinder window 404 and a stop button 405. The viewfinder window 404 is used to display the preview image collected by the camera. The stop button 405 is configured to trigger the mobile phone to stop video recording and generate a video file.

In some embodiments, the photographing interface 401 may further include a pause button 406. The pause button 406 is used to trigger the mobile phone to pause video recording. It should be understood that, only when the mobile phone is in a recording state, the user may trigger the mobile phone to pause recording, and when the mobile phone is in a paused recording state, the user may trigger the mobile phone to continue the video recording.

S302: The mobile phone receives a first triggering operation performed by the user on the photographing interface, and the mobile phone performs masking processing on the recorded content in response to the first triggering operation, where the recorded content includes the preview image collected by the camera and/or the sound collected by the microphone on the mobile phone.

Generally, in the video recording process of the mobile phone, the camera on the mobile phone collects an image and the microphone collects a sound. When privacy is involved in the preview image collected by the camera and/or the sound collected by the microphone, the user may trigger, by entering the first triggering operation, the mobile phone to perform masking processing on the preview image and/or the sound, to remove privacy information in the image and/or the sound.

In some embodiments, the first triggering operation may be a first preset gesture entered by the user on the photographing interface, such as an S-shaped gesture or a V-shaped gesture. The first preset gesture is used to trigger the mobile phone to perform masking processing on the recorded content. Preset gestures used to trigger the mobile phone to perform masking processing on the preview image collected by the camera and the sound collected by the microphone may be different. In this embodiment, the photographing interface of the mobile phone may include the preset button, or may not include the preset button.

In some other embodiments, the first triggering operation may be a tap operation performed by the user on the preset button. For example, the first triggering operation may be a tap operation performed by the user on the picture masking button 402. In response to the tap operation performed by the user on the picture masking button 402, the mobile phone may perform masking processing on the preview image collected by the camera. For another example, the first triggering operation may be a tap operation performed by the user on the sound masking button 403. In response to the tap operation performed by the user on the sound masking button 403, the mobile phone may perform masking processing on the sound collected by the microphone. For another example, the first triggering operation may be a tap operation performed by the user on the video masking button 407. In response to the tap operation performed by the user on the video masking button 407, the mobile phone may perform masking processing on the preview image collected by the camera and the sound collected by the microphone.

A status of the preset button includes a masked state and an unmasked state. When the preset button is in the masked state, the mobile phone needs to mask the recorded content. When the preset button is in the unmasked state, the mobile phone does not need to mask the recorded content. Switching of the state of the preset button may be implemented by a tap operation performed by the user on the preset button. Specifically, the preset button on the photographing interface is initially in the unmasked state. After receiving the tap operation performed by the user on the preset button, the mobile phone switches the state of the preset button to the masked state in response to the tap operation. In addition, the mobile phone starts to perform masking processing on the recorded content. Then, if the mobile phone receives a tap operation performed by the user on the preset button again, it indicates that the masking processing on the recorded content needs to be released, and the mobile phone switches the state of the preset button to the unmasked state. In addition, the mobile phone stops performing masking processing on the recorded content.

In some embodiments, the masking processing performed by the mobile phone on the preview image collected by the camera may be picture closing processing. A status of the camera on the mobile phone includes an enabled state and a disabled state. When the camera is in the enabled state, the camera normally works, and the camera may normally collect an image. The viewfinder window in the photographing interface may display an image actually photographed by the camera. In the disabled state, the camera stops working and stops collecting images. Correspondingly, when performing the picture closing processing on the preview image collected by the camera, the mobile phone disables the camera, that is, switches the state of the camera from the enabled state to the disabled state. In this case, the viewfinder window in the photographing interface is in a black screen state, which is equivalent to that the preview image collected by the camera is a black screen image. Therefore, a picture portion corresponding to a camera disabled period in a finally recorded video presents a black screen effect, so that the mobile phone is prevented from photographing content involving privacy, thereby avoiding privacy disclosure.

In some other embodiments, the masking processing performed by the mobile phone on the preview image collected by the camera may be picture encryption processing. When performing the picture encryption processing on the preview image collected by the camera, the mobile phone may encrypt the preview image collected by the camera by using the following solutions, to mask privacy content on the preview image.

In one solution, the mobile phone may encrypt a part of a picture of the preview image collected by the camera. The following describes, with reference to a specific example, a process in which the mobile phone encrypts a part of the picture of the preview image.

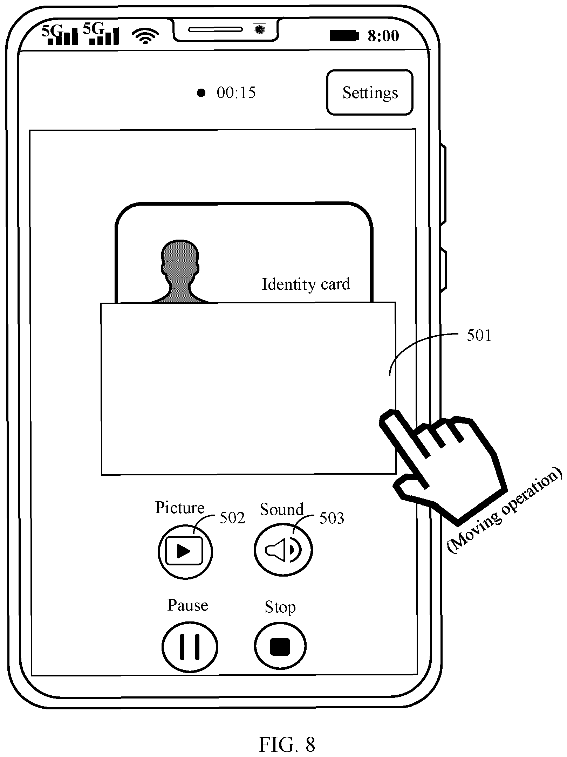

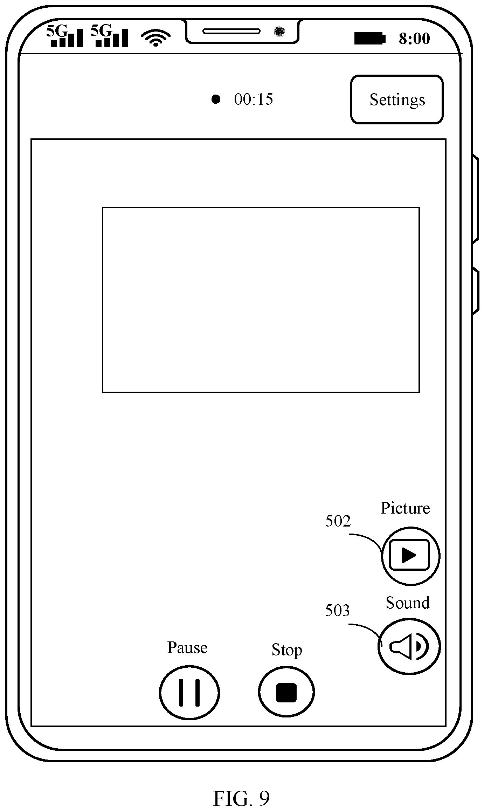

In an example, in response to the first triggering operation, first, the mobile phone may display an occlusion box on the photographing interface, where dimensions (that is, a height and a width) of the occlusion box are adjustable, and the occlusion box is movable, so that the user can adjust a position and the dimensions of the occlusion box according to an occlusion requirement. For example, as shown in FIG. 8, the mobile phone may display an occlusion box 501 on the photographing interface. Then, when the user moves the occlusion box, the mobile phone correspondingly moves the occlusion box 501 in response to a moving operation performed by the user on the occlusion box 501. A position of the moved occlusion box 501 on the photographing interface may be shown in FIG. 9.

Then, in response to that adjustment of the occlusion box is stopped or in response to that a display time of the occlusion box exceeds a preset time threshold, the mobile phone obtains information about the occlusion box (that is, a current position and current dimensions of the occlusion box), and determines, based on the information, a to-be-occluded area on the preview image displayed on the photographing interface. Then, the mobile phone encrypts a picture portion corresponding to the to-be-occluded area.

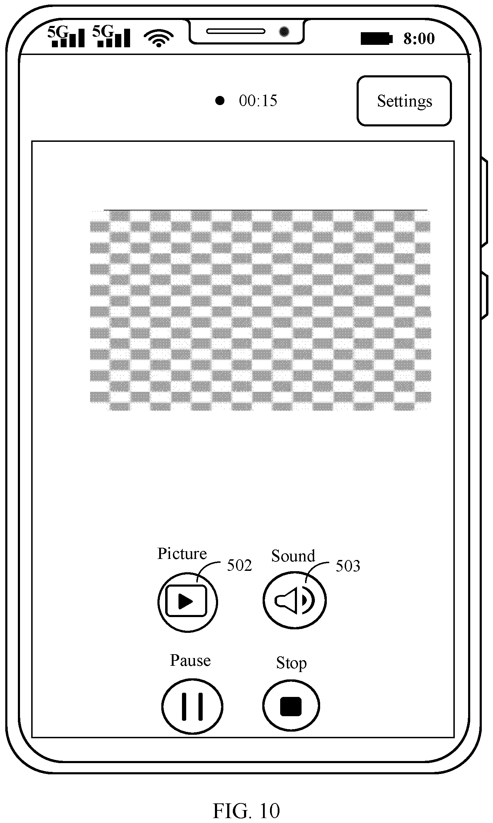

When encrypting the picture portion corresponding to the to-be-occluded area, the mobile phone may replace a pixel value of the picture portion with a preset pixel value. For example, the mobile phone replaces the pixel value of the picture portion with 255, so that the picture portion corresponding to the to-be-occluded area presents black, thereby implementing occlusion. The mobile phone may alternatively add mosaics to the picture portion (as shown in FIG. 10), or occlude the picture portion by using an occlusion object, to implement occlusion.

A pattern of the occlusion object may be selected by the user, that is, in this solution, the mobile phone displays a plurality of patterns of the occlusion object on a related interface (for example, the photographing interface or a setting interface) for selection by the user. In addition, the mobile phone uses an occlusion object selected by the user as the occlusion object used to occlude the picture portion corresponding to the to-be-occluded area. The occlusion object may be selected before the mobile phone performs picture encryption processing on the preview image collected by the camera. Certainly, the pattern of the occlusion object used to occlude the picture portion corresponding to to-be-occluded area may alternatively be a default pattern in the mobile phone. This is not limited in this application.

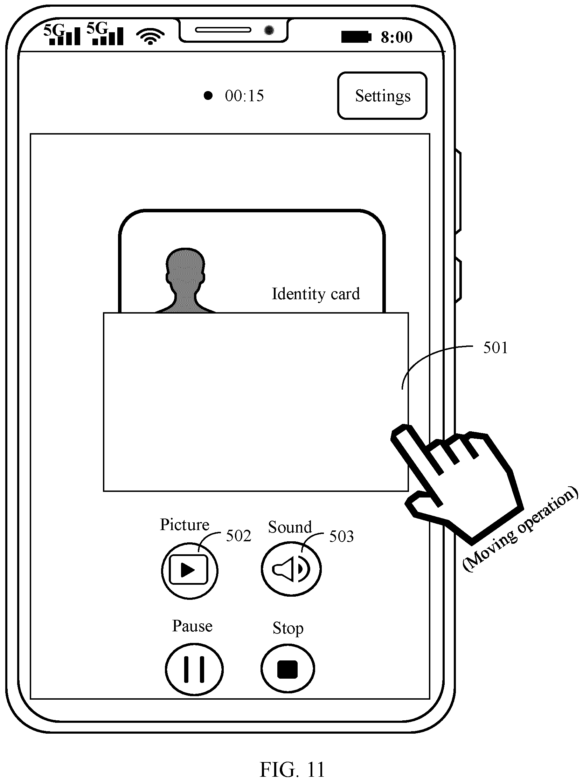

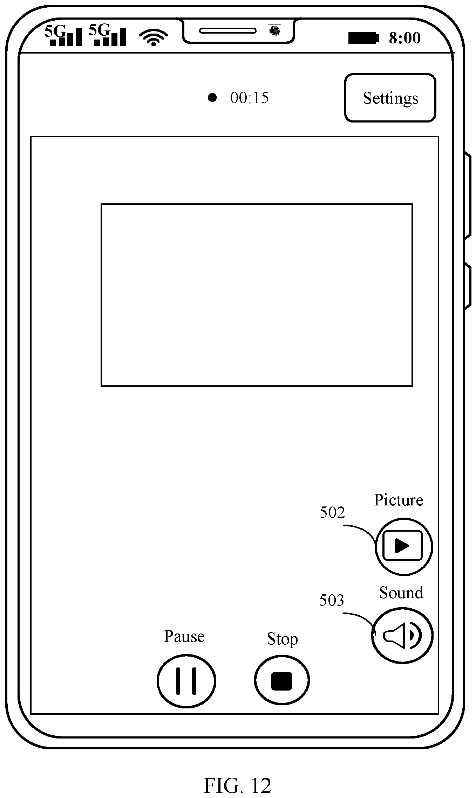

In another example, the mobile phone may occlude a picture of the preview image by using the occlusion box. Based on an adjustment operation performed by the user, the mobile phone adjusts the position, the dimensions, and the like of the occlusion box, that is, adjusts a picture occluded by the occlusion box, so that privacy-involved content on the preview image can be occluded by using the occlusion box. Specifically, in response to the first triggering operation, first, the mobile phone may display the occlusion box on the photographing interface, where the dimensions (that is, the height and the width) of the occlusion box are adjustable, and the occlusion box is movable, so that the user can adjust the position and the dimensions of the occlusion box according to an occlusion requirement. For example, as shown in FIG. 11, the mobile phone may display the occlusion box 501 on the photographing interface. Then, when the user moves the occlusion box, the mobile phone correspondingly moves the occlusion box 501 in response to a moving operation performed by the user on the occlusion box 501. A position of the moved occlusion box 501 on the photographing interface may be shown in FIG. 12. Then, in response to that the adjustment of the occlusion box is stopped or in response to that the display time of the occlusion box exceeds the preset time threshold, the mobile phone adds the occlusion box 501 to a position in which the occlusion box 501 is located on the preview image, to occlude a picture of the preview image by using the occlusion box, and an occlusion effect of the occlusion box is similar to that shown in FIG. 12.

In some embodiments, to facilitate the user in adjusting the occlusion box and to prevent the user from accidentally triggering a control displayed on the photographing interface in a process of adjusting the occlusion box, the mobile phone moves a target control on the photographing interface to a preset target position in response to an adjustment operation (for example, a moving operation or a dimension adjustment operation) performed by the user on the occlusion box, where the preset target position indicates a position that has less impact on an operation of the user on the photographing interface. The target control may be a pre-specified control that needs to be moved on the photographing interface. For example, as shown in FIG. 8 and FIG. 9, the target control is a picture masking button 502 and a sound masking button 503, and the mobile phone moves the picture masking button 502 and the sound masking button 503 to an edge of a screen. Certainly, the mobile phone may alternatively set a state of a target control (for example, all controls or some controls) on the photographing interface to a masked state in a process in which the user adjusts the occlusion box. In this case, the photographing interface no longer displays the target control. In response to that the adjustment of the occlusion box is stopped or in response to that the display time of the occlusion box exceeds the preset time threshold, the mobile phone restore a state setting of the target control to a visible state, that is, the photographing interface continues to display the target control.

In another example, after the mobile phone receives the first triggering operation, it indicates that privacy-involved content exists in the preview image collected by the camera. Privacy content in the preview image needs to be encrypted. In this case, the mobile phone first automatically performs semantic analysis on the preview image collected by the camera to determine an image of a to-be-encrypted object in the preview image, where the to-be-encrypted object indicates an object involving the privacy content (such as an identity card or a license plate number). Then, the mobile phone encrypts the image of the to-be-encrypted object, for example, adds mosaics to the image of the to-be-encrypted object or occludes the image of the to-be-encrypted object by using an occlusion object, to automatically encrypt a part of the picture of the preview image.

In another solution, the mobile phone may perform encryption processing on the entire preview image collected by the camera, for example, add mosaics to the whole picture of the preview image, so that the image in a finally generated video is an image added with mosaics. For another example, a pixel value of the whole picture portion of the preview image is replaced with a preset pixel value, to implement fast encryption processing of the image and prevent a problem that the encrypted image still exposes privacy due to encryption of a part of the picture of the image.

It should be noted that, the mobile phone may also encrypt the whole picture of the entire preview image by using the occlusion box, and a process of encrypting the whole picture of the entire preview image is similar to the foregoing process of encrypting a part of the picture of the preview image by using the occlusion box.

When the mobile phone performs masking processing on the preview image collected by the camera, in one aspect, the mobile phone may randomly select a processing manner from the picture closing processing and the picture encryption processing, to perform masking processing on the preview image by using the selected processing manner. For example, after the user taps the picture masking button 402 shown in FIG. 4, the mobile phone performs picture closing processing or picture encryption processing on the preview image collected by the camera. In another aspect, the mobile phone may first determine a manner selected by the user to perform masking processing on the preview image, and then perform corresponding masking processing on the preview image by using the processing manner, that is, the first triggering operation is used to trigger the mobile phone to perform, by using the processing manner selected by the user, masking processing on the preview image collected by the camera. The following describes, with reference to two examples, a specific process in which the mobile phone uses the manner selected by the user to perform masking processing on the preview image.

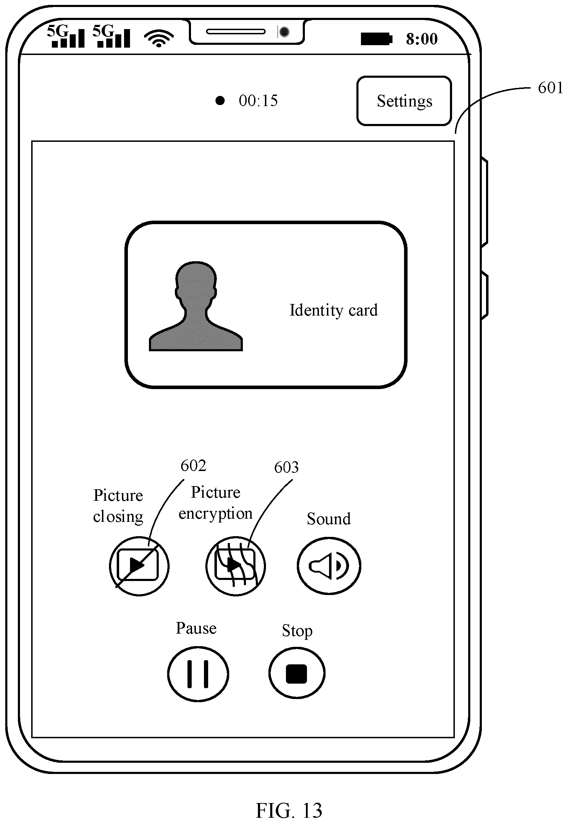

In an example, the picture masking button may include a picture closing button (that is, a fourth masking button) and a picture encryption button (that is, a fifth masking button). The picture closing button is used to trigger the mobile phone to perform picture closing processing on the preview image collected by the camera. The picture encryption button is used to trigger the mobile phone to perform picture encryption processing on the preview image collected by the camera. For example, as shown in FIG. 13, a photographing interface 601 may include a picture closing button 602 and a picture encryption button 603. The user may perform a tap operation (for example, a single-tap operation) on the picture closing button 602, and the tap operation herein is the first triggering operation. In response to the tap operation, the mobile phone performs picture closing processing on the preview image collected by the camera, that is, the mobile phone disables the camera, to cause the camera to stop image photographing. In addition, in this case, a preview image displayed on the photographing interface 601 is a black screen image. Therefore, a picture portion corresponding to a camera disabled period in a finally recorded video presents a black screen effect, so that privacy is prevented from being involved in a picture in the video, thereby avoiding privacy disclosure. The user may further perform a tap operation (for example, a single-tap operation) on the picture encryption button 603, and the tap operation herein is the first triggering operation. In response to the tap operation, the mobile phone performs picture encryption processing on the preview image collected by the camera, to occlude privacy content in the preview image, so that a picture portion corresponding to a picture encryption period in a finally obtained video obtained through recording is an encrypted image instead of an image actually photographed by the camera, thereby avoiding privacy disclosure.

In another example, when the user triggers, by using a gesture, the mobile phone to perform masking processing on the preview image, different gestures correspond to different processing manners, that is, the first preset gesture includes a camera disabling gesture or a picture encryption gesture. When the user enters a picture closing gesture on the photographing interface, the picture closing gesture is the first triggering operation, and in response to the picture closing gesture, the mobile phone performs picture closing processing on the preview image collected by the camera, that is, the mobile phone disables the camera on the mobile phone. When the user enters the picture encryption gesture on the photographing interface, the picture encryption gesture is the first triggering operation, and in response to the picture encryption gesture, the mobile phone performs picture encryption processing on the preview image collected by the camera.

The picture closing gesture and the picture encryption gesture may be preset in the mobile phone. In addition, the mobile phone may remind, on the photographing interface of video recording, the user of the camera disabling gesture, the picture encryption gesture, and functions triggered by the camera disabling gesture and the picture encryption gesture (that is, the camera disabling gesture is used to trigger the mobile phone to perform picture closing processing on the preview image collected by the camera; and the picture encryption gesture is used to trigger the mobile phone to perform picture encryption processing on the preview image collected by the camera).

In some embodiments, to improve convenience of image masking processing, the picture closing button and the picture encryption button may directly be level-1 menu controls, that is, the picture closing button and the picture encryption button are directly displayed on the photographing interface (as shown in FIG. 13).

It should be noted that the photographing interface shown in FIG. 13 is only an example. The photographing interface may alternatively include a picture masking button corresponding to one masking processing manner, that is, the picture masking button includes the picture closing button or the picture encryption button. When the picture masking button includes the picture closing button, if the user performs a tap operation on the picture closing button, the mobile phone performs, in response to the tap operation, picture closing processing on the preview image collected by the camera. For another example, when the picture masking button includes the picture encryption button, if the user performs a tap operation on the picture encryption button, the mobile phone performs, in response to the tap operation, picture encryption processing on the preview image collected by the camera.

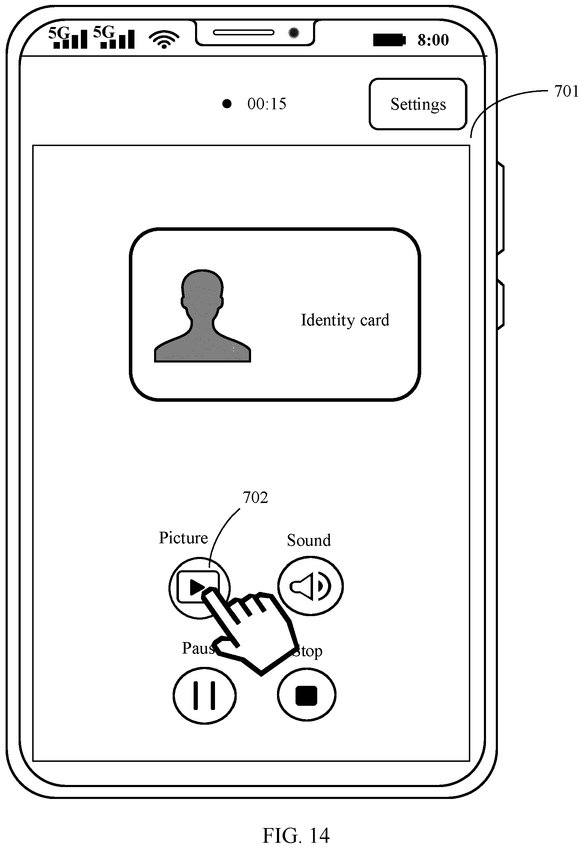

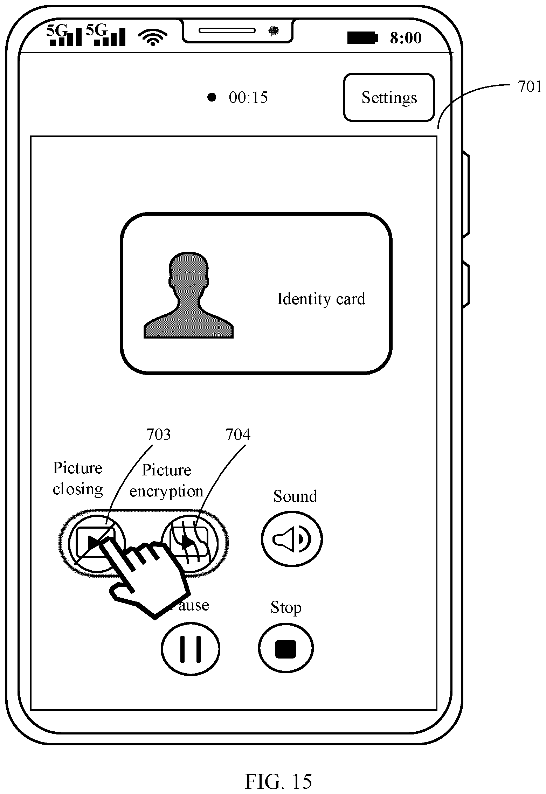

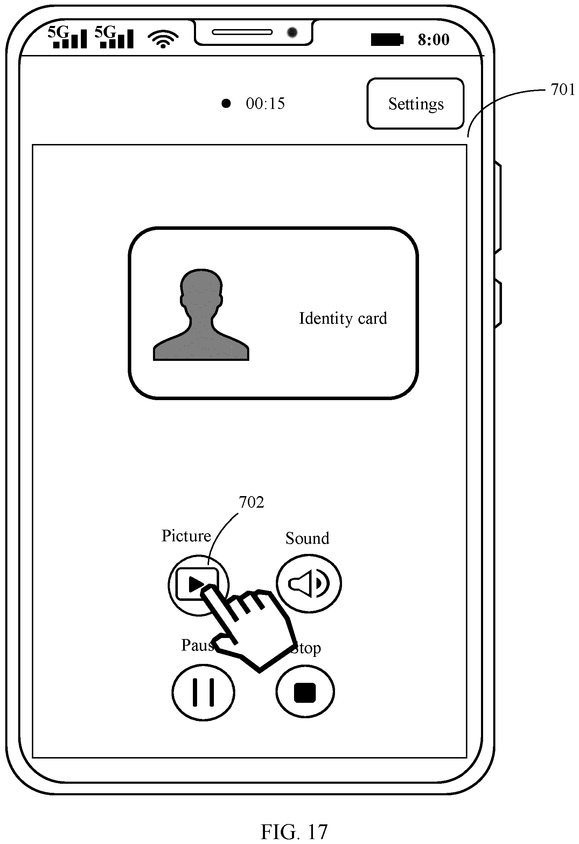

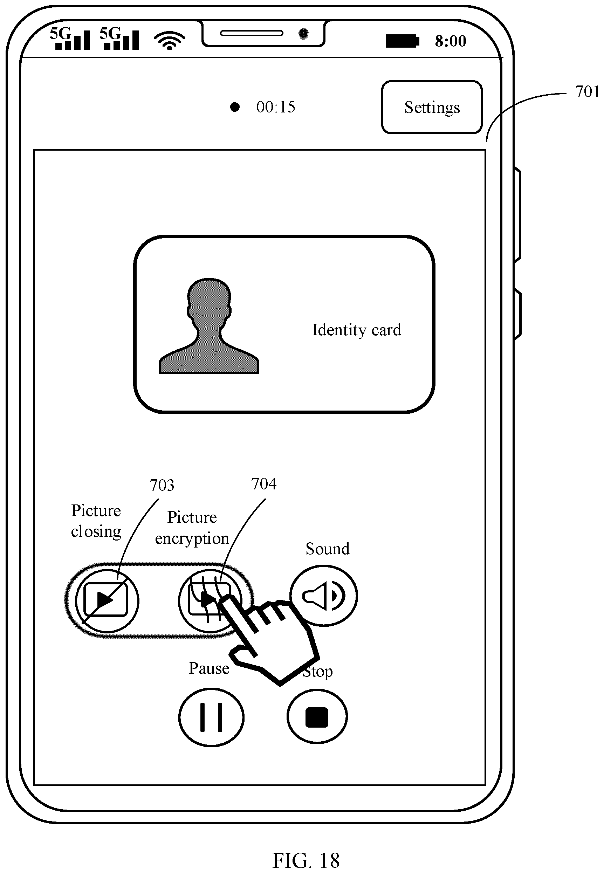

In some other embodiments, to make the photographing interface simpler, and avoid a problem that user misoperation may easily occur due to too many controls on the photographing interface, the picture closing button and the picture encryption button may alternatively be level-2 menu controls, that is, only after the user triggers a level-1 menu control that is displayed on the photographing interface and that corresponds to the picture closing button and the picture encryption button, the picture closing button and the picture encryption button are displayed on the photographing interface. Before being triggered by the user, the picture closing button and the picture encryption button are in a hidden state, that is, are not displayed on the photographing interface. For example, a picture button (that is, a first button) 702 on a photographing interface 701 shown in FIG. 14 or FIG. 17 is a level-1 menu control of the picture closing button and the picture encryption button. In this case, the picture closing button and the picture encryption button are in a hidden state. If the user performs a tap operation (for example, a single-tap operation) on the picture button 702, the mobile phone displays, in response to the tap operation, the photographing interface 701 shown in FIG. 15 or FIG. 18. In this case, the photographing interface 701 displays level-2 menu controls (that is, a picture closing button 703 and a picture encryption button 704) corresponding to the picture button 702.

The following describes, with reference to FIG. 14 to FIG. 16 and FIG. 17 to FIG. 19, a process in which the mobile phone performs masking processing on the preview image collected by the camera when the picture closing button and the picture encryption button are level-2 menu controls.

In a recording process, the preview image collected by the camera on the mobile phone includes an image of an identity card. If the user considers that the identity card involves privacy, the user may tap the picture button (the picture button 702 shown in FIG. 14 or FIG. 17) on the photographing interface. The mobile phone receives the tap operation, and displays, in response to the tap operation, the photographing interface 701 shown in FIG. 15 or FIG. 18. In this case, the photographing interface 701 displays the level-2 menu controls corresponding to the picture button, that is, displays the picture closing button 703 and the picture encryption button 704. Then, when the user continues to perform a tap operation on the picture closing button 703 or the picture encryption button 704, the mobile phone performs, in response to the tap operation, corresponding masking processing on the preview image collected by the camera.

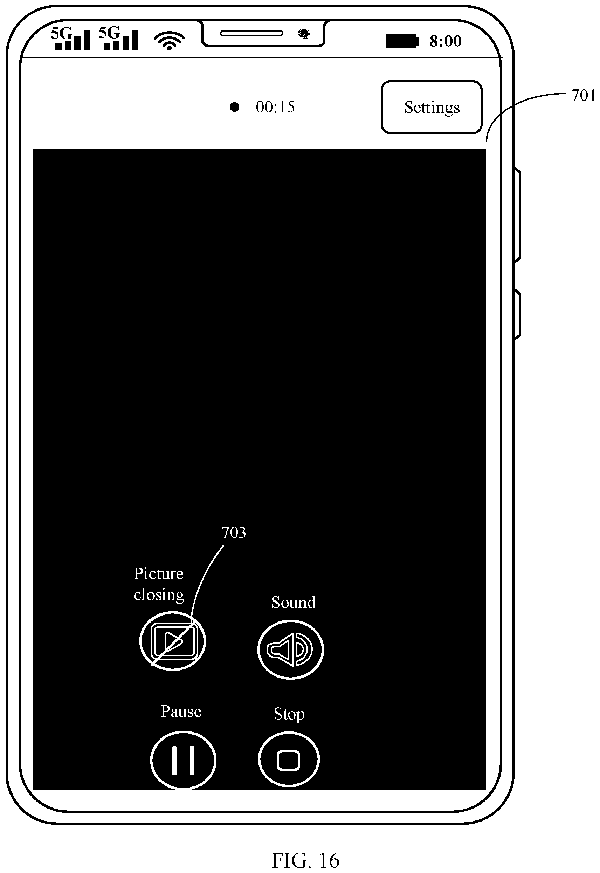

For example, in one case, if the user wants to close a privacy picture, as shown in FIG. 15, the user may perform a tap operation on the picture closing button 703 on the photographing interface. In response to the tap operation, the mobile phone disables the camera on the mobile phone, and displays the photographing interface 701 shown in FIG. 16. The picture closing button 703 is directly displayed on the photographing interface 701, so that the user can intuitively learn that the mobile phone is currently in a picture closing state, that is, the mobile phone performs picture closing processing on the preview image collected by the camera. In this case, the mobile phone disables the camera, so that a picture portion corresponding to a camera disabled period in a finally recorded video file presents a black screen effect, thereby avoiding a problem of privacy disclosure.

In addition, if the user wants the mobile phone to stop performing picture closing processing on the preview image collected by the camera, the user may perform a tap operation again on the picture closing button 703 in FIG. 16. After receiving the tap operation, the mobile phone switches a state of the picture closing button 703 to an unmasked state in response to the tap operation, and enables the camera, that is, the mobile phone switches a state of the camera from a disabled state to an enabled state, to enable the camera to continue image photographing, so that a video portion recorded after the mobile phone responds to the tap operation displays an image actually collected by the camera, instead of a black screen.

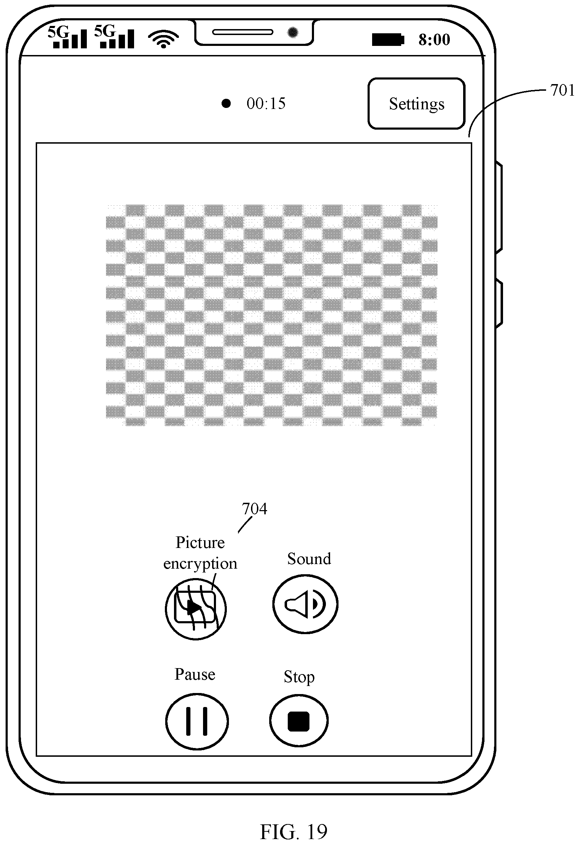

In another case, if the user does not want to expose privacy content, but wants to maintain a picture structure and a color tone of a video, to avoid a lack of connection between previous video content and later video content due to a black screen, and also prevent people who watch a recorded video from being confused about a possible occurrence of a black screen in the video, the user may perform a tap operation on the picture encryption button on the photographing interface (as shown in FIG. 18). In response to the tap operation, the mobile phone encrypts the preview image collected by the camera, and displays the photographing interface 701 shown in FIG. 19. The photographing interface 701 directly displays the picture encryption button 704, so that the user learns that the mobile phone is currently in a picture encryption state. In this case, the mobile phone encrypts the preview image collected by the camera, so that even though the image still exists in a finally recorded image, the image is an encrypted image.

In addition, if the user wants the mobile phone to stop performing picture encryption processing on the preview image collected by the camera, the user may perform a tap operation again on the picture encryption button 704 in FIG. 19. After receiving the tap operation, the mobile phone switches a state of the picture encryption button 704 to an unmasked state in response to the tap operation, and stops performing picture encryption processing on the preview image collected by the camera, so that a video portion recorded after the mobile phone responds to the tap operation displays an image actually collected by the camera, instead of an encrypted image.

It may be understood that, when performing masking processing on the preview image collected by the camera, the mobile phone performs masking processing on a preview image collected by the camera within a time period from a time point at which the mobile phone receives the first triggering operation to a time point at which the user triggers the mobile phone to stop performing masking processing on the preview image collected by the camera.

In this embodiment of this application, the user may flexibly select, according to a requirement of the user, a manner of performing masking processing on the preview image collected by the camera. In a video recording process, when a preview image collected by the camera involves privacy, if the user wants to close a privacy picture, the user may select a picture closing processing manner (as described above, the user performs a tap operation on the picture closing button). The mobile phone disables the camera in response to a picture closing processing manner selected by the user, so that a picture of a video portion recorded in a camera disabled period is a black screen, thereby implementing a picture closed effect. If the user does not want to expose privacy content, does not want inconsecutive contents photographed previously and later, and prevents people who watch the finally recorded video from being confused about a possible occurrence of a black screen in the video, the user may select a picture encryption processing manner (as described above, the user performs a tap operation on the picture encryption button), and the mobile phone encrypts, in response to the picture encryption processing manner selected by the user, the preview image collected by the camera, so that privacy content on the preview image can be occluded, thereby avoiding privacy disclosure, and ensuring continuity of the contents photographed before and after.

The foregoing embodiment describes the process in which the mobile phone performs masking processing on the preview image collected by the camera. The following continues to describe a process in which the mobile phone performs masking processing on the sound collected by the microphone with reference to specific embodiments.

In some embodiments, the masking processing performed by the mobile phone on the sound collected by the microphone may be sound off processing. A status of the microphone includes an enabled state and a disabled state. The enabled state may also be referred to as an unmute state, that is, the microphone is in a working state, and sound collection may be normally performed. The disabled state may also be referred to as a mute state, that is, the microphone is in a non-working state, and the sound collection is stopped. Correspondingly, when performing sound off processing on the sound collected by the microphone, the mobile phone disables the microphone, that is, switches the state of the microphone from the enabled state to the disabled state. In this case, the microphone stops recording. Therefore, a sound portion corresponding to a microphone disabled period in a finally recorded video presents a mute effect, and the mobile phone is prevented from recording a sound involving privacy, thereby avoiding privacy disclosure.

In some other embodiments, the masking processing performed by the mobile phone on the sound collected by the microphone may be sound encryption processing. Specifically, after obtaining the sound collected by the microphone, the mobile phone may encrypt the sound. In one solution, when encrypting the sound, the mobile phone may replace the sound with set content. For example, the sound collected by the microphone is "listing time of company A", and an encrypted sound obtained after the mobile phone encrypts the sound may be "masked for privacy reasons". The set content may be selected by the user. Specifically, the mobile phone may display a plurality of pieces of replacement content on a related interface (for example, a photographing interface or a setting interface) for selection by the user. In addition, the mobile phone uses the replacement content selected by the user as the set content. The set content may be selected before the mobile phone performs sound encryption processing on the sound collected by the microphone. Certainly, the set content may alternatively be default replacement content in the mobile phone. This is not limited in this application.

In another solution, when encrypting the sound collected by the microphone, the mobile phone may perform sound change processing on the sound, that is, may replace a frequency of the sound with a preset frequency. For example, the sound collected by the microphone corresponds to a male speaker. After the mobile phone performs sound change processing on the sound, an obtained sound (that is, an encrypted sound) is generated by a female speaker in terms of perception, so that an identity of the speaker corresponding to the sound can be hidden, thereby avoiding disclosure of identity privacy of the speaker.

When the mobile phone performs masking processing on the sound collected by the microphone, in one aspect, the mobile phone may randomly select a processing manner from the sound off processing and the sound encryption processing, to perform masking processing on the sound by using the selected processing manner. For example, after the user taps the sound masking button 403 shown in FIG. 4, the mobile phone performs sound off processing or sound encryption processing on the sound collected by the microphone. In another aspect, the mobile phone may first determine a manner selected by the user to perform masking processing on the sound collected by the microphone, and then perform masking processing on the sound by using the processing manner, that is, the first triggering operation is used to trigger the mobile phone to perform masking processing on the sound collected by the microphone by using the processing manner selected by the user. The following describes, with reference to two examples, a specific process in which the mobile phone uses the manner selected by the user to perform masking processing on the sound collected by the microphone.

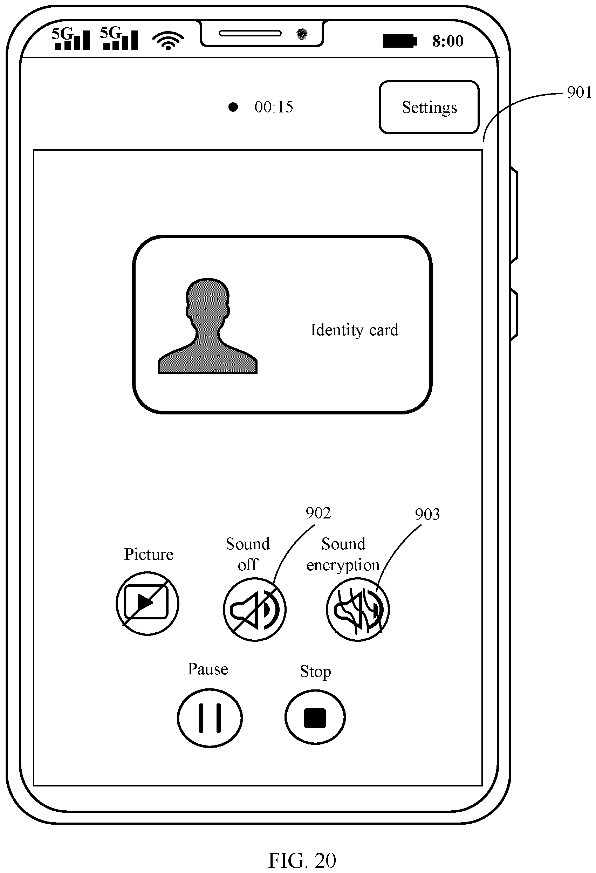

In an example, the sound masking button may include a sound off button (that is, a sixth masking button) and a sound encryption button (that is, a seventh masking button). The sound off button is used to trigger the mobile phone to perform sound off processing on the sound collected by the microphone. The sound encryption button is configured to trigger the mobile phone to perform sound encryption processing on the sound collected by the microphone. For example, as shown in FIG. 20, a photographing interface 901 may include a sound off button 902 and a sound encryption button 903. The user may perform a tap operation (for example, a single-tap operation) on the sound off button 902, and the tap operation herein is the first triggering operation. In response to the tap operation, the mobile phone performs sound off processing on the sound collected by the microphone, that is, the mobile phone disables the microphone, to enable the microphone to stop sound collection. Therefore, a sound portion corresponding to a microphone disabled period in a finally recorded video presents a mute effect, to prevent a sound in the video from involving privacy, thereby avoiding privacy disclosure. The user may further perform a tap operation (for example, a single-tap operation) on the sound encryption button 903, and the tap operation herein is the first triggering operation. In response to the tap operation, the mobile phone performs sound encryption processing on the sound collected by the microphone, to modify content of the sound. Therefore, sound content corresponding to a sound encryption processing period in a finally recorded video is modified sound content, instead of sound content actually collected by the microphone, thereby avoiding privacy disclosure.

In another example, when the user triggers, by using a gesture, the mobile phone to perform masking processing on the sound, different gestures correspond to different processing manners, that is, the first preset gesture includes a sound off gesture or a sound encryption gesture. When the user enters the sound off gesture on the photographing interface, the sound off gesture is the first triggering operation, and the mobile phone performs, in response to the first triggering operation, sound off processing on the sound collected by the microphone, that is, the mobile phone disables the microphone. When the user enters the sound encryption gesture on the photographing interface, the sound encryption gesture is the first triggering operation, and the mobile phone encrypts, in response to the sound encryption gesture, the sound collected by the microphone.

The sound off gesture and the sound encryption gesture may be preset in the mobile phone. In addition, the mobile phone may remind, on the photographing interface of video recording, the user of the microphone disabling gesture, the sound encryption gesture, and functions triggered by the microphone disabling gesture and the sound encryption gesture (that is, the microphone disabling gesture is used to trigger the mobile phone to perform sound off processing on the sound collected by the microphone; and the sound encryption mobile phone is configured to trigger the mobile phone to perform sound encryption processing on the sound collected by the microphone).

In some embodiments, to improve convenience of sound masking processing, the sound off button and the sound encryption button may directly be level-1 menu controls, that is, the sound off button and the sound encryption button are directly displayed on the photographing interface (as shown in FIG. 20).

It should be noted that the photographing interface shown in FIG. 20 is only an example. The photographing interface may alternatively include only a sound masking button corresponding to one masking processing manner, that is, the sound masking button includes the sound off button or the sound encryption button. For example, when the sound masking button includes the sound off button, if the user performs a tap operation on the sound off button, the mobile phone performs, in response to the tap operation, sound off processing on the sound collected by the microphone. For another example, when the sound masking button includes the sound encryption button, if the user performs a tap operation on the sound encryption button, the mobile phone performs, in response to the tap operation, sound encryption processing on the sound collected by the microphone.

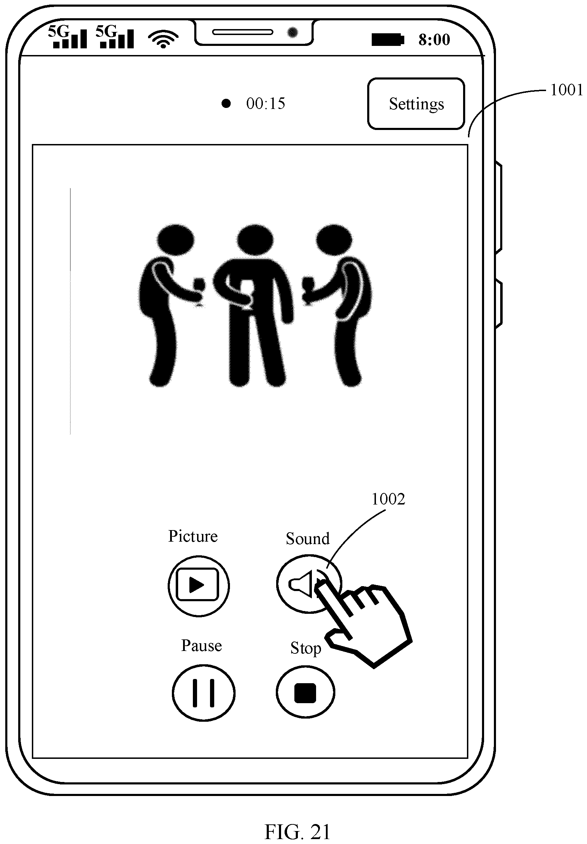

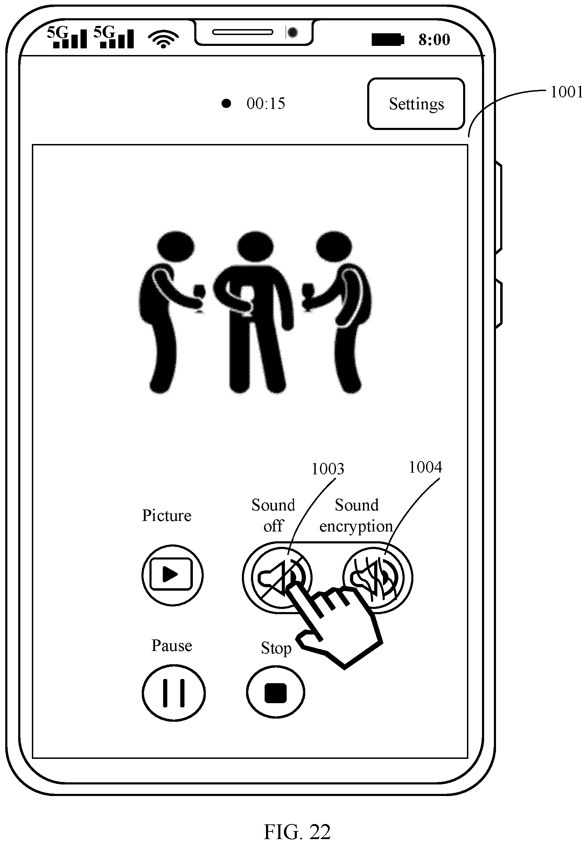

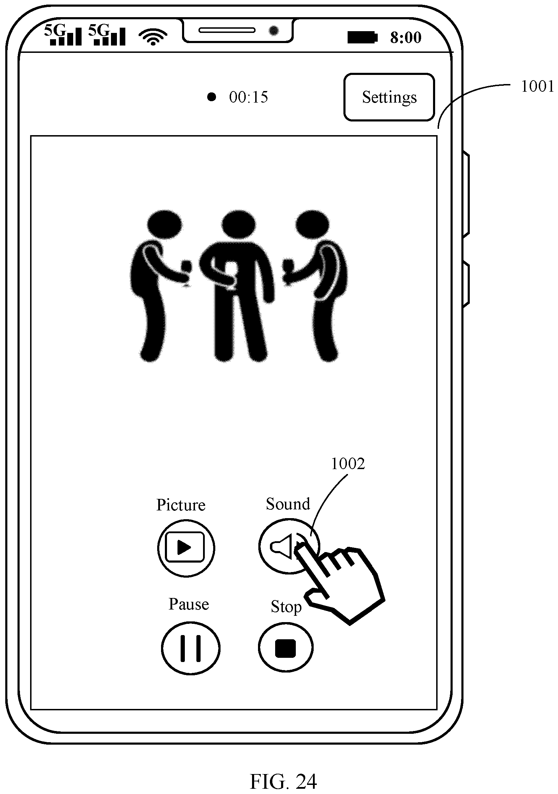

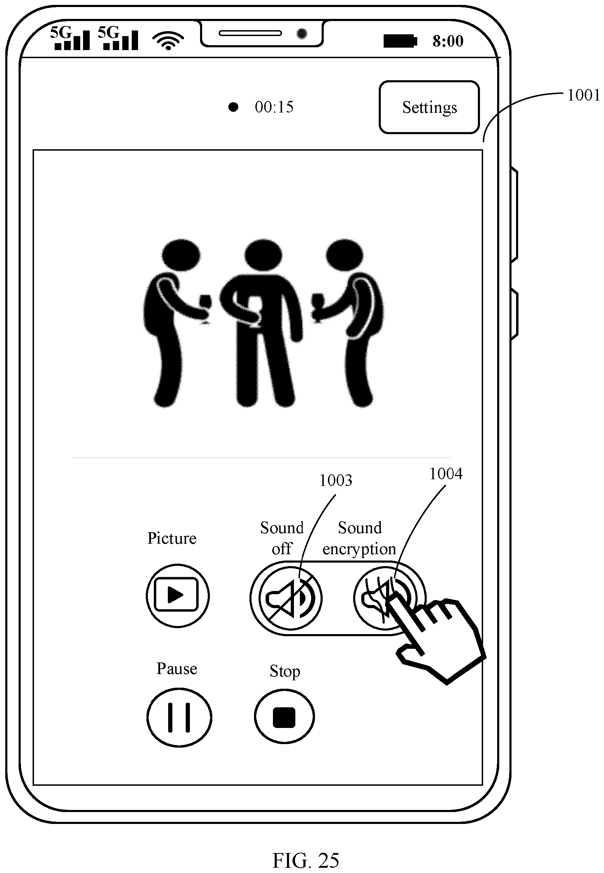

In some other embodiments, to make the photographing interface simpler, and avoid a problem that user misoperation may easily occur due to too many controls on the photographing interface, the sound off button and the sound encryption button may alternatively be level-2 menu controls, that is, only after the user triggers a level-1 menu control that is displayed on the photographing interface and that corresponds to the sound off button and the sound encryption button, the sound off button and the sound encryption button are displayed on the photographing interface. Before being triggered by the user, the sound off button and the sound encryption button are in a hidden state, that is, are not displayed on the photographing interface. For example, a sound button (that is, a second button) 1002 on a photographing interface 1001 shown in FIG. 21 or FIG. 24 is a level-1 menu control of the sound off button and the sound encryption button. In this case, the sound off button and the sound encryption button are in the hidden state. If the user performs a tap operation (for example, a single-tap operation) on the sound button 1002, the mobile phone displays, in response to the tap operation, the photographing interface 1001 shown in FIG. 22 or FIG. 25, that is, the mobile phone displays level-2 menu controls (that is, the sound off button 1003 and the sound encryption button 1004) corresponding to the sound button 802.

The following describes, with reference to FIG. 21 to FIG. 23 and FIG. 24 to FIG. 26, a process in which the mobile phone performs masking processing on the sound collected by the microphone when the sound off button and the sound encryption button are level-2 menu controls.

First, in a recording process, the mobile phone photographs a multi-person chat scenario. If the user considers that chat content involves privacy, the user may first perform a tap operation on the sound button on the photographing interface (the sound button 1002 shown in FIG. 21 or FIG. 24). Then, the mobile phone receives the tap operation, and displays, in response to the tap operation, the photographing interface 1001 shown in FIG. 22 or FIG. 25. Then, when the user continues to perform a tap operation on the sound off button 1003 or the sound encryption button 1004, the mobile phone performs, in response to the tap operation, corresponding masking processing on the sound collected by the microphone.

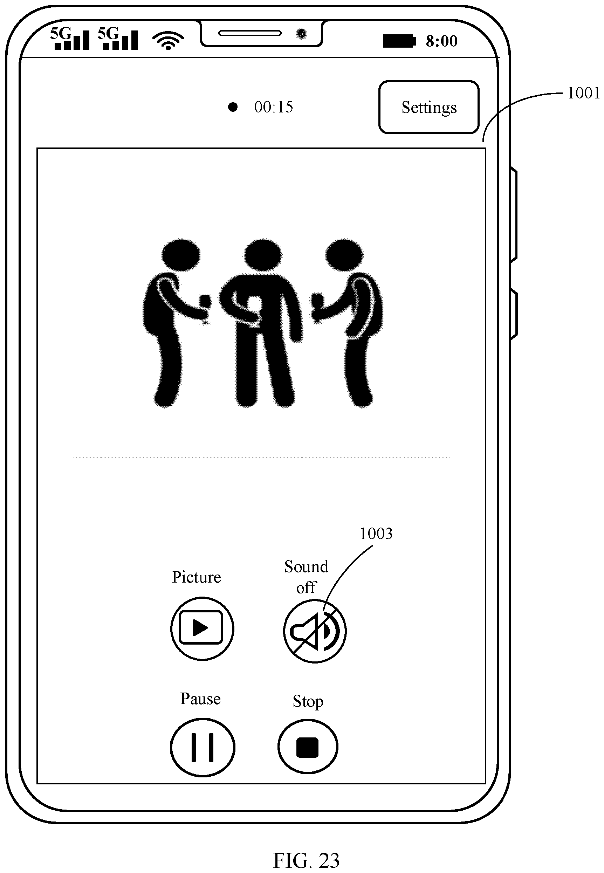

For example, in one case, if the user wants to turn off a sound involving privacy, as shown in FIG. 22, the user may perform a tap operation on the sound off button 1003 on the photographing interface. The mobile phone disables the microphone on the mobile phone in response to the tap operation, and displays the photographing interface 1001 shown in FIG. 23. The photographing interface 1001 directly displays the sound off button 1003, so that the user can intuitively learn that the mobile phone is in a sound off state, that is, the mobile phone performs sound off processing on the sound collected by the microphone. In this case, the mobile phone disables the microphone, so that sounds of a multi-person chat portion in a finally recorded video are muted, thereby avoiding privacy exposure.

In addition, if the user wants the mobile phone to stop performing sound off processing on the sound collected by the microphone, the user may perform a tap operation again on the sound off button 1003 in FIG. 23. After receiving the tap operation, the mobile phone switches a state of the sound off button 1003 to an unmasked state in response to the tap operation, and enables the microphone, that is, the mobile phone switches a state of the microphone from a disabled state to an enabled state, to enable the microphone to continue sound collection, so that a video portion recorded after the mobile phone responds to the tap operation has sounds, instead of being muted.

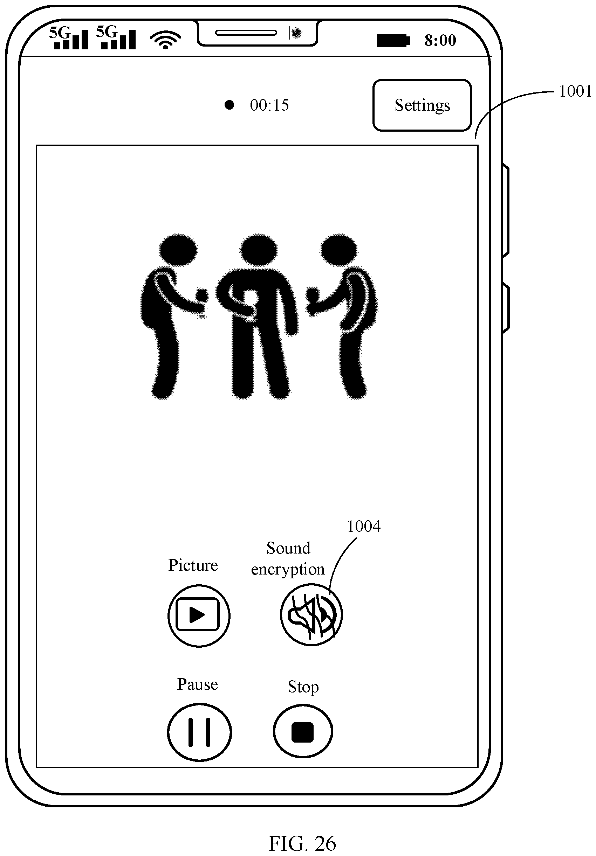

In another case, if the user does not want to expose the chat content, but wants to keep sounds of a video to avoid a sound interruption caused by muting, prevent a disconnection between previous and later sounds, and prevent people who watch the recorded video from being confused about a possible occurrence of muting in the video. In this case, the user may perform a tap operation on the sound encryption button 1004 on the photographing interface (as shown in FIG. 25). The mobile phone encrypts, in response to the tap operation, the sound collected by the microphone, and displays the photographing interface 1001 shown in FIG. 26. The sound encryption button 1004 is directly displayed on the photographing interface 1001, so that the user learns that the mobile phone is currently in a sound encryption state. In this case, the mobile phone encrypts the sound collected by the microphone. Therefore, even though the multi-person chat portion in the finally recorded video still has sounds, the chat content is encrypted sounds.

In addition, if the user wants the mobile phone to stop performing sound encryption processing on the sound collected by the microphone, a tap operation may be performed on the sound encryption button 1004 in FIG. 26. After receiving the tap operation, the mobile phone stops, in response to the tap operation, encrypting the sound collected by the microphone, so that sound content in a video recorded after the mobile phone enables the microphone is real.

It may be understood that, when performing masking processing on the sound collected by the microphone, the mobile phone performs masking processing on a sound segment within a time period from a time point at which the mobile phone receives the first triggering operation to a time point at which the user triggers the mobile phone to stop performing masking processing on the sound collected by the microphone.

In this embodiment of this application, the user may flexibly select, according to a requirement of the user, a manner of performing masking processing on a sound in the recording process. In a video recording process, when a sound collected by the microphone involves privacy, if the user wants to turn off a privacy sound, the user may select a sound off processing manner (as described above, the user performs a tap operation on the sound off button). The mobile phone disables the microphone in response to a sound off processing manner selected by the user, so that a sound of a video portion recorded in a microphone disabled period is muted, thereby implementing a sound off effect. If the user does not want to expose privacy content, does not want inconsecutive sounds recorded previously and later, and prevents people who watch a recorded video from being confused about a possible occurrence of muting in the video, the user may select a sound encryption processing manner (as described above, the user performs a tap operation on the sound encryption button). The mobile phone encrypts, in response to the sound encryption processing manner selected by the user, the sound collected by the microphone, so that content of the sound can be changed, and when the sound is played, an encrypted sound is played.

The masking processing performed by the mobile phone on the recorded content (that is, the preview image collected by the camera and/or the sound collected by the microphone) is triggered by the user (for example, the user enters the first triggering operation on the photographing interface), and the user triggers only when determining that the recorded content involves privacy. Therefore, there is specific reaction time between determining, by the user, whether privacy exists in the recorded content and entering the first triggering operation on the photographing interface by the user, that is, there is a specific delay for the masking processing performed by the mobile phone. In other words, an operation delay occurs to the mobile phone. Therefore, content recorded before the masking processing performed by the mobile phone may still involve privacy, and there is a risk of privacy disclosure.

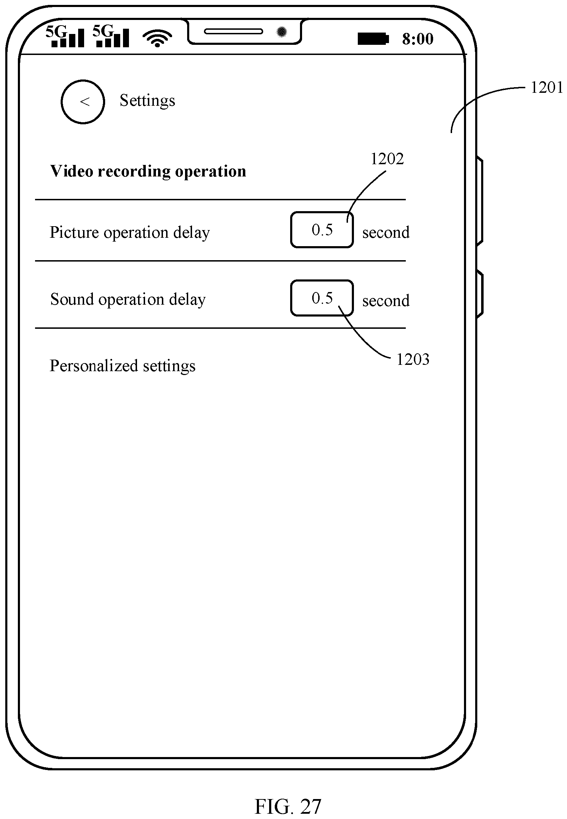

Therefore, to resolve the foregoing operation delay problem, in one case, a setting interface of video recording may include a plurality of operation delay controls. The plurality of operation delay controls may include a picture operation delay control (that is, a second operation delay control) 1202 and a sound operation delay control (that is, a third operation delay control) 1203 in a setting interface 1201 shown in FIG. 27. The picture operation delay control 1202 is used to set a picture operation delay. Correspondingly, when performing masking processing on the preview image collected by the camera, the mobile phone not only performs masking processing on a preview image currently collected by the camera, but also performs masking processing on a preview image collected by the camera within a picture operation delay before a current time (that is, a time point at which the mobile phone receives a triggering operation corresponding to the masking processing, for example, a time point at which the mobile phone receives the first triggering operation), to resolve a picture masking delay problem. The sound operation delay control 1203 is used to set a sound operation delay.

Correspondingly, when performing masking processing on the sound collected by the microphone, the mobile phone not only performs masking processing on a sound currently collected by the microphone, but also performs masking processing on a sound collected by the microphone within a sound operation delay before a current time (that is, a time point at which the mobile phone receives a triggering operation corresponding to the masking processing, for example, a time point at which the mobile phone receives the first triggering operation), to resolve a sound masking delay problem.

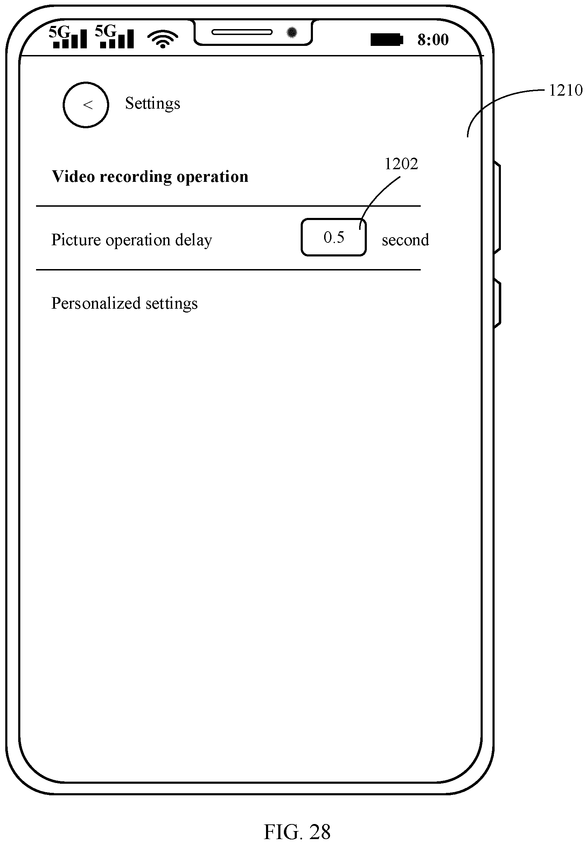

In another case, the setting interface of video recording may include one operation delay control. The operation delay control is used to set a picture operation delay. For example, the mobile phone may display a setting interface 1210 shown in FIG. 28, and the setting interface may include an operation delay control. The operation delay control may be the picture operation delay control 1202 shown in FIG. 28.

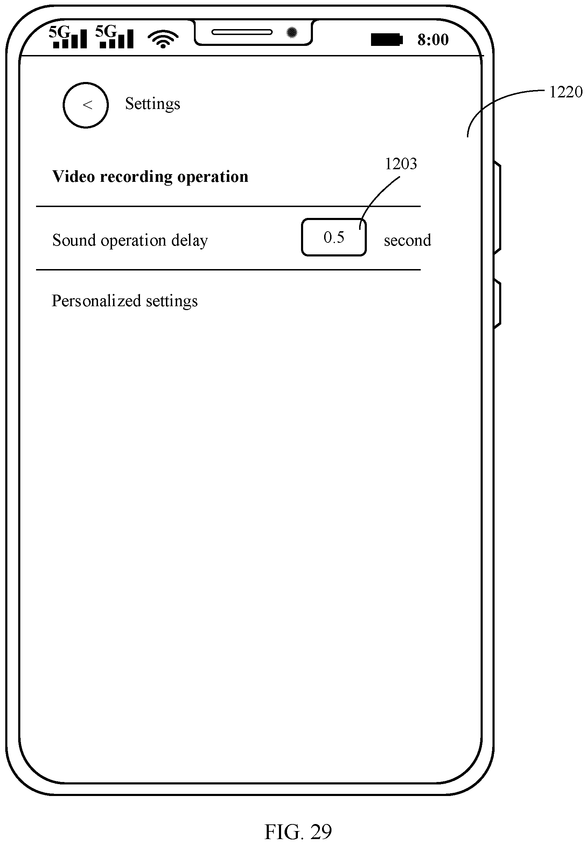

In another case, the setting interface of video recording may include one operation delay control. The operation delay control is used to set a sound operation delay. For example, the mobile phone may display a setting interface 1220 shown in FIG. 29, and the setting interface may include an operation delay control. The operation delay control may be the sound operation delay control 1203 shown in FIG. 29.

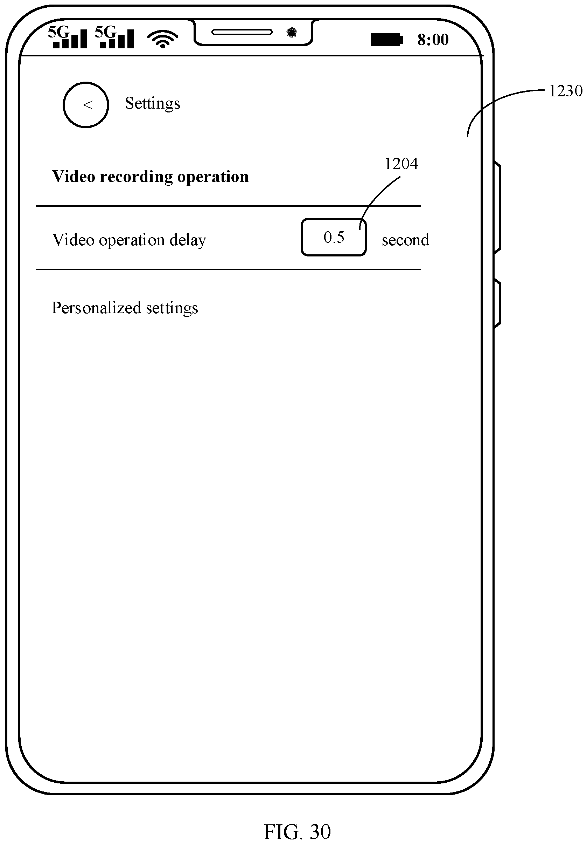

In another case, the setting interface of video recording may include one operation delay control. The operation delay control is used to set both a picture operation delay and a sound operation delay. For example, the mobile phone may display a setting interface 1230 shown in FIG. 30, and the setting interface may include an operation delay control. The operation delay control may be a video operation delay control (that is, a first operation delay control) 1204 shown in FIG. 29.

The setting interface is an interface displayed when the mobile phone receives a third triggering operation performed by the user on the photographing interface, and responds to the third triggering operation.

In an implementation, the photographing interface may include a setting button, and the setting button may be used to trigger the mobile phone to jump to the setting interface. Therefore, the third triggering operation may be a tap operation performed by the user on the setting button. The mobile phone displays the setting interface in response to the tap operation.

In another implementation, the third triggering operation may be a second preset gesture (such as a V-shaped gesture) entered by the user on the photographing interface. The second preset gesture may be preconfigured in the mobile phone. In addition, the mobile phone may remind the user of the second preset gesture and a function (that is, a function used to trigger the mobile phone to display the setting interface) triggered by the second preset gesture on the photographing interface of video recording. In this implementation, the photographing interface of the mobile phone may include the setting button, or may not include the setting button.

In another implementation, the third triggering operation may be a sliding operation (for example, sliding to the left) that is in a specific direction and that is entered by the user on the photographing interface. In this implementation, the photographing interface of the mobile phone may include the setting button, or may not include the setting button.

The following describes a setting process of the picture operation delay by using an example in which the setting interface includes a picture operation delay control and a sound operation delay control.

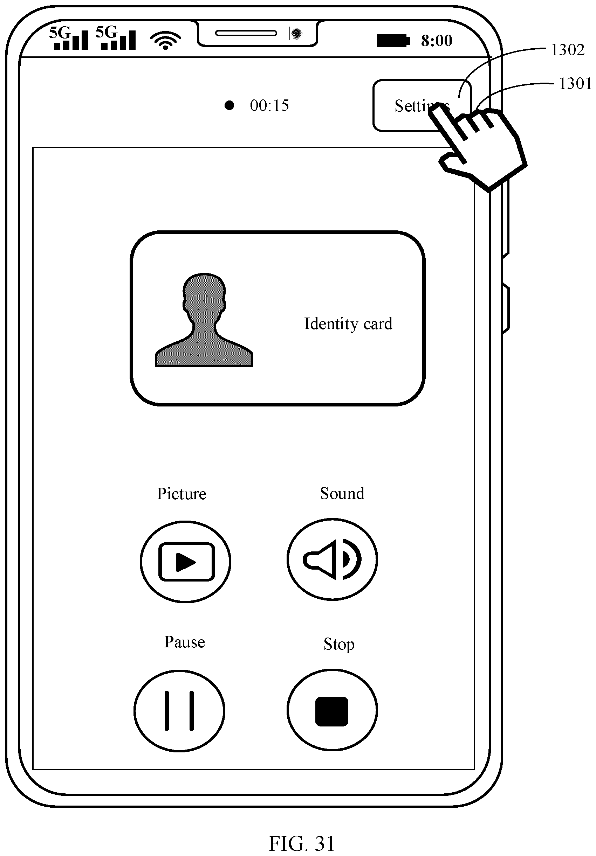

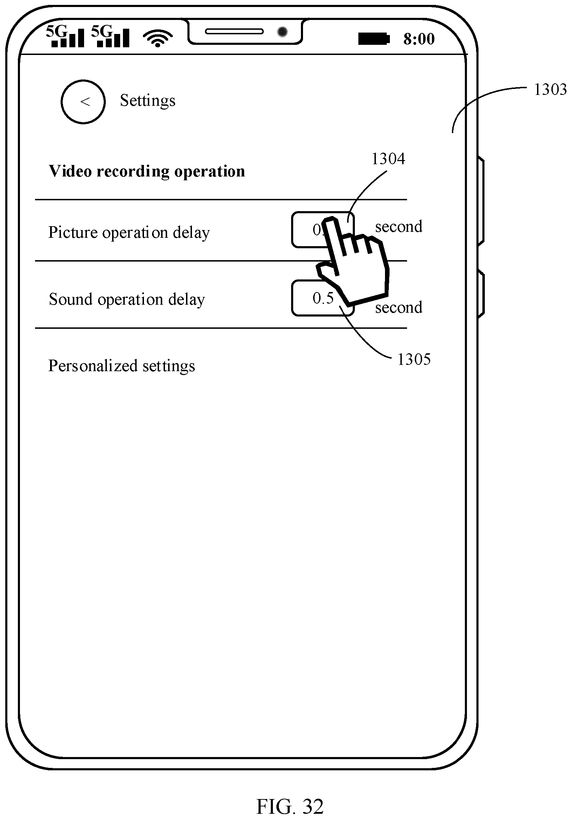

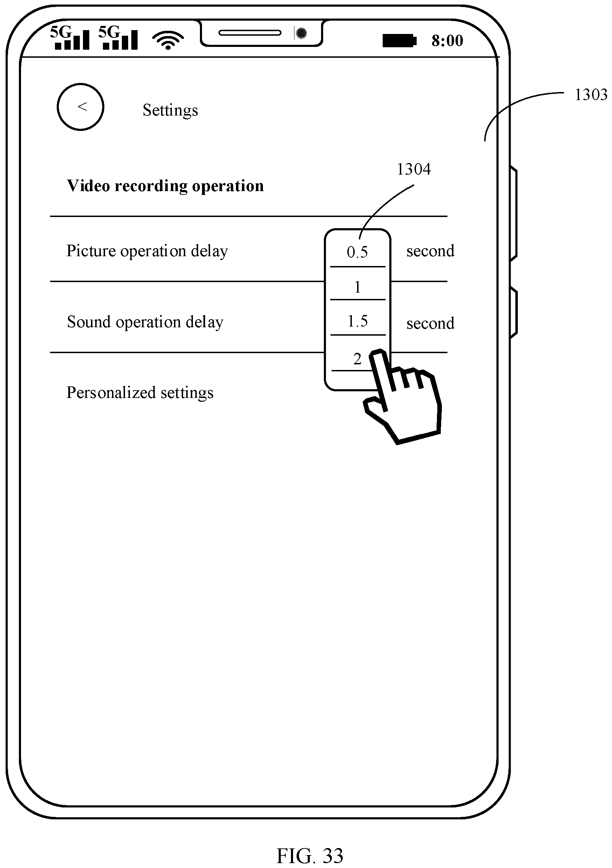

For example, first, as shown in FIG. 31, the mobile phone receives a tap operation performed by the user on a setting button 1302 on a photographing interface 1301. Then, the mobile phone displays, in response to the tap operation, a setting interface 1303 shown in FIG. 32, where the setting interface 1303 displays a picture operation delay control 1304 and a sound operation delay control 1305. The picture operation delay control 1304 and the sound operation delay control 1305 are drop-down boxes. If the user performs a tap operation on the picture operation delay control 1304, as shown in FIG. 33, the mobile phone displays time options (that is, 0.5 second, 1 second, 1.5 seconds, and 2 seconds) included in the picture operation delay control 1304, so that the user selects a picture operation delay, to complete setting the picture operation delay. For example, if the picture operation delay set by the user is 2 seconds, and the mobile phone starts to respond to the first triggering operation entered by the user at 10:10:09, the mobile phone not only performs masking processing on a preview image currently collected by the camera, but also performs masking processing on a preview image collected by the camera in a time period of 10:10:07-10:10:09.

In addition, if the user does not set a picture operation delay, when performing masking processing on the preview image collected by the camera, the mobile phone performs, based on a default picture operation delay (for example, 0.5 second), masking processing on a preview image collected by the camera within a picture operation delay before a current time.

If the user does not set a sound operation delay, when performing masking processing on the sound collected by the microphone, the mobile phone performs, based on a default sound operation delay (for example, 0.5 second), masking processing on a sound collected by the microphone within a sound operation delay before a current time.

The picture operation delay may be set before the mobile phone performs masking processing on the preview image collected by the camera; and/or the sound operation delay may be set before the mobile phone performs masking processing on the sound collected by the microphone.

It should be understood that the controls included in the setting interface shown in FIG. 32 and FIG. 33 are only an example, and the setting interface may further include another control, for example, a shutter sound setting control, a watermark setting control, a pattern of an occlusion object corresponding to the picture encryption processing, or replacement content corresponding to the sound encryption processing. In addition, the picture operation delay control and the sound operation delay control that are included in the setting interface are only an example, and the picture operation delay control and the sound operation delay control may be another type of control (for example, a text box).

In another case, when resolving the operation delay problem, the mobile phone may further automatically perform masking processing on a corresponding preview image based on an object included in a preview image collected by the camera before a current time. Specifically, when the mobile phone receives the first triggering operation and the first triggering operation is used to trigger the mobile phone to perform masking processing on the preview image collected by the camera, it indicates that a preview image currently collected by the camera involves privacy. Therefore, the mobile phone needs to perform masking processing on the preview image currently collected by the camera. However, to avoid a case in which a preview image collected by the camera before a current time (that is, a time point at which the mobile phone receives the first triggering operation) still involves privacy due to an operation delay of the mobile phone, the mobile phone may first determine a target object included in the preview image currently collected by the camera. Then, the mobile phone also performs corresponding masking processing on a target preview image that includes the target object and that is collected within a specified time period before the current time. The target object indicates an object corresponding to a preset type involving privacy. The preset type may be set according to an actual requirement. For example, the preset type includes a license plate number type, an identity card type, an address type, and the like.

The specified time period may be set by the user, and a setting process of the specified time period is similar to the setting process of the picture operation delay. Details are not described herein again. Certainly, when the specific time period may alternatively be a default setting on the mobile phone.

If the first triggering operation is used to trigger the mobile phone to perform picture encryption processing on an image, when performing corresponding masking processing on the target preview image, the mobile phone also performs corresponding picture encryption processing on the target preview image. If the first triggering operation is used to trigger the mobile phone to perform picture closing processing on an image, when performing corresponding masking processing on the target preview image, the mobile phone may directly delete the target preview image or replace all pixel values of the target preview image with pixel values (that is, 255) corresponding to black, so that the target preview image also presents a black screen effect.

For example, the mobile phone may perform related processing on a preview image by using a pre-trained network model, to determine an object included in the preview image.

S303: The mobile phone receives a second triggering operation performed by the user on the photographing interface.

S304: The mobile phone stops video recording and generates a video file in response to the second triggering operation. Content of the video file is at least partially masked.

The second triggering operation may be a tap operation (for example, a single-tap operation) performed by the user on the stop button. For example, the photographing interface 401 for video recording shown in FIG. 4 to FIG. 7 includes the stop button 405, and in a video recording process, the mobile phone may receive, at any time, a tap operation performed by the user on the stop button 405. In response to the tap operation, the mobile phone ends recording and generates a recorded video file. The video file includes a multi-frame image collected by the camera on the mobile phone, a sound collected by the microphone, and recorded content obtained after masking processing in the video recording process.

It may be understood that the multi-frame image is an image that is collected in the recording process and that does not need masking processing, and the sound is a sound that is collected in the recording process and that does not need masking processing.

In this embodiment of this application, in the video recording process of the mobile phone, when receiving the first triggering operation performed by the user on the photographing interface, the mobile phone indicates that the recorded content involves privacy. To protect privacy, the mobile phone performs masking processing on the recorded content to remove privacy information in the recorded video, so that privacy information is not involved in the video file generated at an end of recording. Therefore, removal of the privacy is implemented in the recording process, and the user does not need to perform subsequent video editing to remove the privacy, but only needs to enter a simple triggering operation in the recording process, thereby reducing cumbersomeness of privacy removal, and effectively improving privacy removal efficiency. In addition, when the mobile phone removes the privacy information involved in the recorded content, a recording state is not affected. Therefore, integrity of the obtained video file can be ensured, to facilitate the user to perform other processing (such as duration statistics processing) by using the video file, and user experience is improved.

In some embodiments, this application provides a computer-readable storage medium, including computer instructions. When the computer instructions are run on an electronic device, the electronic device is enabled to perform the video recording method described above.

In some embodiments, this application provides a computer program product. When the computer program product runs on an electronic device, the electronic device is enabled to perform the video recording method described above.

It may be clearly learned by a person skilled in the art from the foregoing descriptions of the implementations that for convenience and brevity of description, only division into the foregoing functional modules is used as an example for description. In actual application, the foregoing functions may be allocated to different functional modules for implementation according to a requirement, that is, an internal structure of an apparatus is divided into different functional modules, to complete all or some of the functions described above.

In the several embodiments provided in this application, it should be understood that the disclosed apparatus and method may be implemented in other manners. For example, the apparatus embodiments described above are merely examples. For example, division of the modules or the units is merely logical function division. In actual implementation, there may be another division manner. For example, a plurality of units or components may be combined or integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, the functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in the embodiments of this application. The foregoing storage medium includes various media that can store program code, for example, a USB flash drive, a removable hard disk, a read-only memory (read only memory, ROM), a random access memory (random access memory, RAM), a magnetic disk, or an optical disc.

The foregoing content is only specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A video recording method, applied to an electronic device, wherein the method comprises:
displaying, by the electronic device, a first interface, wherein the first interface is an interface displayed when the electronic device performs video recording, and the first interface comprises a preview image collected by a camera on the electronic device;
receiving, by the electronic device, a first triggering operation performed by a user on the first interface, and performing masking processing on recorded content of the electronic device in response to the first triggering operation, wherein the recorded content comprises the preview image collected by the camera and/or a sound collected by a microphone on the electronic device; and
receiving, by the electronic device, a second triggering operation performed by the user, and stopping, by the electronic device, the video recording and generating a video file in response to the second triggering operation, wherein content of the video file is at least partially masked.

2. The method according to claim 1, wherein the recorded content comprises the preview image collected by the camera and the sound collected by the microphone, the first interface comprises a first masking button, and the first masking button is used to trigger the electronic device to perform masking processing on the preview image collected by the camera and the sound collected by the microphone; and
the performing masking processing on recorded content of the electronic device in response to the first triggering operation comprises:
displaying, by the electronic device, a second interface or a third interface in response to a tap operation performed by the user on the first masking button, wherein the second interface and the third interface are interfaces displayed when the electronic device performs the video recording, a black screen image is displayed in the second interface, and an image in the third interface is partly or fully encrypted; and
at least some of images and sounds in the video file are masked.

3. The method according to claim 2, wherein the second interface or the third interface comprises a masking stop button; and the method further comprises:
in response to a tap operation performed by the user on the masking stop button, stopping, by the electronic device, performing the masking processing on the preview image collected by the camera and the sound collected by the microphone.

4. The method according to claim 1, wherein the recorded content comprises the preview image collected by the camera, the first interface comprises a second masking button, and the second masking button is used to trigger the electronic device to perform masking processing on the preview image collected by the camera; and
the performing masking processing on recorded content of the electronic device in response to the first triggering operation comprises:
displaying, by the electronic device, a second interface or a third interface in response to a tap operation performed by the user on the second masking button, wherein the second interface and the third interface are interfaces displayed when the electronic device performs the video recording, a black screen image is displayed in the second interface, and an image in the third interface is partly or fully encrypted; and
at least some of images in the video file are masked.

5. The method according to claim 4, wherein the first interface further comprises a third masking button, and the third masking button is used to trigger the electronic device to perform masking processing on the sound collected by the microphone; and
the method further comprises:
in a video recording process of the electronic device, receiving, by the electronic device, a tap operation performed by the user on the third masking button; and
in response to the tap operation on the third masking button, masking, by the electronic device, the sound collected by the microphone, wherein
at least some of sounds in the video file are masked.

6. The method according to claim 1, wherein the recorded content comprises the sound collected by the microphone, the first interface comprises a third masking button, and the third masking button is used to trigger the electronic device to perform masking processing on the sound collected by the microphone; and
the performing masking processing on recorded content of the electronic device in response to the first triggering operation comprises:
in response to a tap operation performed by the user on the third masking button, masking, by the electronic device, the sound collected by the microphone, wherein at least some of sounds in the video file are masked.

7. The method according to claim 1, wherein the first interface comprises a fourth masking button and a fifth masking button, the fourth masking button is used to trigger the electronic device to disable the camera and display a black screen image, and the fifth masking button is used to trigger the electronic device to encrypt the preview image collected by the camera and display an encrypted preview image; and
the performing masking processing on recorded content of the electronic device in response to the first triggering operation comprises:
displaying, by the electronic device, a second interface in response to a tap operation performed by the user on the fourth masking button, wherein the second interface is an interface displayed when the electronic device performs the video recording, and the black screen image is displayed in the second interface; and at least some of images in the video file are black screen images;
or
displaying, by the electronic device, a third interface in response to a tap operation performed by the user on the fifth masking button, wherein the third interface is an interface displayed when the electronic device performs the video recording, and an image in the third interface is partly or fully encrypted; and at least some of images in the video file are encrypted.

8. The method according to any one of claims 2, 4, or 7, wherein that the image in the third interface is partly or fully encrypted comprises: an occlusion box is displayed on a preview image displayed in the third interface, wherein the occlusion box is used to occlude a part or a whole of a picture of the preview image;
the method further comprises:
in response to an adjustment operation performed by the user on the occlusion box, adjusting a picture occluded by the occlusion box; and
that at least some of the images in the video file are masked is specifically as follows: at least some of the images in the video file are images with the occlusion box.

9. The method according to any one of claims 2, 4, or 7, wherein that the image in the third interface is partly or fully encrypted comprises: an occlusion box is displayed on a preview image displayed in the third interface, wherein the occlusion box is used to determine a partial picture or a whole picture to be masked in the preview image;
the method further comprises:
in response to an adjustment operation performed by the user on the occlusion box, adjusting a picture occluded by the occlusion box, determining a to-be-occluded area in the preview image, and performing encryption processing on the to-be-occluded area; and
an image in the to-be-occluded area in the third interface is encrypted.

10. The method according to claim 7, wherein the method further comprises:
displaying, by the electronic device, a fourth interface, wherein the fourth interface is an interface displayed when the electronic device performs the video recording, and the fourth interface comprises a first button; and
in response to a tap operation performed by the user on the first button, displaying, by the electronic device, the first interface comprising the fourth masking button and the fifth masking button.

11. The method according to claim 2 or 6, wherein the performing masking processing on the sound collected by the microphone comprises:
controlling, by the electronic device, the microphone to stop sound collection; or encrypting, by the electronic device, the sound collected by the microphone, wherein the encrypting the sound collected by the microphone indicates to adjust a frequency of the sound collected by the microphone and/or replace the sound collected by the microphone with preset sound content.

12. The method according to any one of claims 1 to 11, wherein the method further comprises:
receiving, by the electronic device, a third triggering operation performed by the user, and displaying a setting interface in response to the third triggering operation performed by the user, wherein the setting interface comprises an operation delay control; and
determining an operation delay in response to a fourth triggering operation performed by the user on the operation delay control, wherein the operation delay indicates duration of performing masking processing in advance.

13. The method according to claim 12, wherein the performing masking processing on recorded content of the electronic device in response to the first triggering operation comprises:
in response to the first triggering operation, performing masking processing on current recorded content of the electronic device and content recorded in a first time period, wherein the first time period indicates a time period of an operation delay before the electronic device receives the first triggering operation.

14. The method according to claim 12 or 13, wherein the operation delay control comprises a first operation delay control, and the first operation delay control is used to set a picture operation delay and a sound operation delay;
or
the operation delay control comprises at least one of a second operation delay control and/or a third operation delay control, the second operation delay is used to set a picture operation delay, and the third operation delay control is used to set a sound operation delay.

15. An electronic device, wherein the electronic device comprises a display, a camera, a memory, a microphone, and one or more processors; the display, the camera, the microphone, and the memory are coupled to the processor; the microphone is configured to collect a sound, the camera is configured to collect an image, the display is configured to display an image generated by the processor and the image collected by the camera, the memory is configured to store computer program code, and the computer program code comprises computer instructions; and when the processor executes the computer instructions, the electronic device is enabled to perform the video recording method according to any one of claims 1 to 14.

16. A computer-readable storage medium, comprising computer instructions, wherein when the computer instructions are run on an electronic device, the electronic device is enabled to perform the video recording method according to any one of claims 1 to 14.

17. A computer program product, wherein when the computer program product runs on an electronic device, the electronic device is enabled to perform the video recording method according to any one of claims 1 to 14.
